# EUROPEAN PATENT SPECIFICATION

(11) **EP 2 621 244 B1**
(45) Date of publication and mention of the grant of the patent: **21.08.2019**
(21) Application number: 11826422.5
(22) Date of filing: 23.09.2011
(51) Int. Cl.: H04W 88/06, G06K 19/077, G06K 19/07

(54) **USER IDENTIFICATION CARD, TERMINAL, AND RELATED PROCESSING METHOD**
NUTZERIDENTIFIZIERUNGSKARTE, ENDGERÄT UND ZUGEHÖRIGES VERARBEITUNGSVERFAHREN
CARTE D'IDENTIFICATION D'UTILISATEUR, TERMINAL ET PROCÉDÉ DE TRAITEMENT ASSOCIÉ

(30) Priority: 26.09.2010 CN 201010292346
(43) Date of publication of application: 31.07.2013
(73) Proprietor: China Mobile Communications Corporation, Beijing 100032 (CN)
(72) Inventor: LI, Lin, Xicheng District Beijing 100032 (CN)
(74) Representative: Körfer, Thomas
(86) International application number: PCT/CN2011/080067
(87) International publication number: WO 2012/037895

(56) References cited:
- EP-A1- 0 409 241
- CN-A- 1 622 663
- CN-A- 1 741 647
- CN-A- 101 136 077
- US-A1- 2007 158 440
- US-A1- 2007 194 134

## Description

This application claims priority from Chinese Patent Application No. 201010292346.5 filed with the Chinese Patent Office on September 26, 2010 and entitled "User Identification Card, Terminal, and Related Processing Method".

### Field of the Invention

The present invention relates to the field of terminal technologies in the wireless communication field, and in particular to a subscriber identity module card, a terminal and a related processing method.

### Background of the Invention

Dual-card-dual-standby techniques mean that two SIM (Subscriber Identity Module) cards can be inserted into one mobile phone terminal at the same time, and the two SIM cards can be in the standby mode at the same time. The dual-card-dual-standby techniques are classified in two types, i.e. a dual-card single-mode dual-standby technique and a dual-card dual-mode dual-standby technique. The dual-card single-mode dual-standby technique is a dual-card-dual-standby technique that two SIM cards belong to a same network standard, i.e. a dual-card-dual-standby technique in the GSM (Global System of Mobile communication) network or a dual-card-dual-standby technique in the CDMA (Code Division Multiple Access) network. The dual-card dual-mode dual-standby technique is a dual-card-dual-standby technique that two SIM cards belong to two network standards, for example, two SIM cards are used, and a GSM mode and a TD-SCDMA (Time Division-Synchronous Code Division Multiple Access) mode are standby at the same time and are used at the same time. The dual-card-dual-standby techniques can allow two SIM cards to be online at the same time and achieve seamless connection, so a subscriber need not perform network switching and two numbers are simultaneously used in one mobile phone for enjoying services such as voice calls, sending and receiving of short messages and the like.

Using the above dual-card-dual-standby techniques, sending and receiving of wireless signals of two modes are realized, and two numbers can be in standby mode at the same time, so that the subscriber can choose the numbers flexibly based upon requirements, for example, one is used for sending short messages and the other is used for phone calls; or one is used as a local number and the other is used as a non-local number; or one is used as a number for working and the other is used as a number for daily life, thereby avoiding mutual interference.

However, it is required by the dual-card-dual-standby techniques that the subscriber must use two SIM cards, which leads to inconvenience in mobile phone replacement or card replacement; in addition, the subscriber can choose different SIM cards from two different operators to use in one mobile phone terminal, so that the operators lose control of choosing SIM cards.

To solve the problems discussed above, presented in this field currently is a single-card dual-number technique, in which two groups of different personalized data (for example, IMSI (International Mobile Subscriber Identification Number), K, OPc, short message central number, etc.) are stored in one SIM card at the same time, that is, two different mobile phone numbers are stored at the same time, can be mutually switched and thus are alternatively used by the subscriber, but the two numbers cannot be available online at the same time.

Furthermore, since there are different authentication mechanisms and algorithms in networks with different standards, in order to ensure authentication safety, two numbers on a single card can only belong to networks with the same standard; in addition, due to the restriction that machine-card instructions in current machine-card interface protocols are single thread instructions, a larger context environment error is likely to occur in a card if the card is operated by the terminal in two network modes at the same time; and thus at present, it is difficult to realize the use of two numbers, belonging to networks with different standards, in one SIM card.

The US patent application US2007/0158440 A1 discloses a semiconductor device improved in IC card function. An external connecting terminal for extended interface not conforming to ISO/IEC7816-3 is disposed on a first main surface of a card chip and in an area sandwiched in between two rows of external connecting terminals for interface conforming to ISO/IEC7816-3 which is for IC card function. With this layout, the memory card function and other electronic circuit functions can be incorporated into the card chip and hence it is possible to improve the function of the card chip.

The patent application EP0409241A1 discloses that an IC card has additional connection terminals adjacent to existing conventional connection terminals. Corresponding additional terminals are arranged in a terminal unit. When the additional terminals of both the IC card and terminal unit are not used, the additional terminals are put under an input mode or a floating mode. Only when the additional terminals are used, they are switched to an input/output mode, under which data are communicated between the IC card and the terminal unit through the additional terminals.

The US patent application US2007194134A1 discloses a smart card including a first interface configured to perform a first type interfacing operation with a host using a plurality of contact pads defined by a contact type smart card protocol, a second interface configured to perform a second type interfacing operation with the host using a subset of the plurality of contact pads, and a controller configured to determine a priority between the first and second interfaces.

### Summary of the Invention

Embodiments of the invention provide a subscriber identity module card, a terminal and a related processing method, to solve the problems in the prior art that two numbers of one subscriber identity module card cannot be used online at the same time and two numbers belonging to networks with different standards cannot be used in one subscriber identity module card.

An embodiment of the disclosure discloses an operation method of a terminal, where the terminal includes a card slot of a subscriber identity module card a first baseband chip and a second baseband chip, the card slot of the subscriber identity module card includes a ground contact, an external clock contact, a first power source contact, a second power source contact, a first reset contact, a second reset contact, a first data transmission interface contact and a second data transmission interface contact, which are used for connecting with a ground pin, an external clock pin, a first power source pin, a second power source pin, a first reset pin, a second reset pin, a first data transmission interface pin and a second data transmission interface pin of the subscriber identity module card respectively when the subscriber identity module card is inserted into the card slot; and a ground interface, a clock interface, a first power source interface, a first reset interface and a first data transmission interface of the first baseband chip are correspondingly connected with the ground contact, the external clock contact, the first power source contact, the first reset contact and the first data transmission interface contact, respectively; and a ground interface, a clock interface, a second power source interface, a second reset interface and a second data transmission interface of the second baseband chip are correspondingly connected with the ground contact, the external clock contact, the second power source contact, the second reset contact and the second data transmission interface contact, respectively. The method includes: sending an external clock signal to the subscriber identity module card after a power source signal is connected with a first smart card chip of the subscriber identity module card; starting a first machine-card reset interface between the first reset pin and the first reset contact as well as a first machine-card data transmission interface between the first data transmission interface pin and the first data transmission interface contact based upon an initial moment of the external clock signal; and implementing interaction of booting data through the first machine-card data transmission interface; and connecting a power source signal with a second smart card chip of the subscriber identity module card after the external clock signal is sent to the subscriber identity module card; starting a second machine-card reset interface between the second reset pin and the second reset contact as well as a second machine-card data transmission interface between the second data transmission interface pin and the second data transmission interface contact based upon an initial moment of connecting the power source signal with the second smart card chip; and implementing interaction of booting data through the second machine-card data transmission interface.

Optionally, starting the second machine-card reset interface based upon the initial moment of connecting the power source signal with the second smart card chip specifically includes: keeping a level of the second machine-card reset interface as a low level within a first time length from the initial moment of connecting the power source signal with the second smart card chip; setting the level of the second machine-card reset interface as a high level when no reset response from the second smart card chip is received within a first set time length; receiving the reset response from the second smart card chip within a second time length to a third time length from an initial moment that the level of the second machine-card reset interface is the high level; and keeping the level of the second machine-card reset interface as the high level after the third time length passes.

Optionally, starting the second machine-card data transmission interface based upon the initial moment of connecting the power source signal with the second smart card chip specifically includes: keeping the second machine-card data transmission interface in a high resistance state within a fourth time length from the initial moment of connecting the power source signal with the second smart card chip, where the fourth time length is smaller than the first time length; setting a level of the second machine-card data transmission interface as a high level after the fourth time length passes; and keeping the second machine-card data transmission interface in a going-to-transmit state after receiving the reset response from the second smart card chip and the third time length passes.

Optionally, the method further includes: determining that standby preparation is started by the terminal; stopping sending an external clock signal to the subscriber identity module card when data transmission through a first machine-card data transmission interface and a second machine-card data transmission interface is not needed and after levels of the first machine-card data transmission interface and the second machine-card data transmission interface are both kept as low levels beyond a fifth time length; and controlling the terminal to enter a standby hibernate mode.

Optionally, the method further includes: when the terminal is in the standby hibernate mode, sending an external clock signal to the subscriber identity module card in the case of determining that data transmission through a first machine-card data transmission interface is needed or that data transmission through a second machine-card data transmission interface is needed; and controlling the first machine-card data transmission interface and the second machine-card data transmission interface to be in a going-to-transmit state after the external clock signal is kept to be output for a sixth time length from an initial moment of the external clock signal.

Optionally, the method further includes:sending correspondingly low-level reset signals to the first smart card chip and the second smart card chip respectively through a first machine-card reset interface and a second machine-card reset interface in the case of determining that data transmission through a first machine-card data transmission interface and a second machine-card data transmission interface is not needed after acquiring a shutdown operation instruction; and stopping sending an external clock signal to the subscriber identity module card and disconnecting power source signals with the first smart card chip and the second smart card chip respectively.

An embodiment of the disclosure discloses a terminal, the terminal including a card slot of a subscriber identity module card, a first baseband chip and a second baseband chip. The card slot of the subscriber identity module card includes a ground contact, an external clock contact, a first power source contact, a second power source contact, a first reset contact, a second reset contact, a first data transmission interface contact and a second data transmission interface contact, which are used for connecting with a ground pin, an external clock pin, a first power source pin, a second power source pin, a first reset pin, a second reset pin, a first data transmission interface pin and a second data transmission interface pin of the subscriber identity module card respectively when the subscriber identity module card is inserted into the card slot; and a ground interface, a clock interface, a first power source interface, a first reset interface and a first data transmission interface of the first baseband chip are correspondingly connected with the ground contact, the external clock contact, the first power source contact, the first reset contact and the first data transmission interface contact, respectively. A ground interface, a clock interface, a second power source interface, a second reset interface and a second data transmission interface of the second baseband chip are correspondingly connected with the ground contact, the external clock contact, the second power source contact, the second reset contact and the second data transmission interface contact, respectively. The first baseband chip is used for sending an external clock signal to the subscriber identity module card after a power source signal is connected with a first smart card chip of the subscriber identity module card; starting a first machine-card reset interface between the first reset pin and the first reset contact as well as a first machine-card data transmission interface between the first machine-card data transmission interface pin and the first machine-card data transmission interface contact based upon an initial moment of the external clock signal; and implementing interaction of booting data through the first machine-card data transmission interface. And the second baseband chip is used for connecting a power source signal with a second smart card chip of the subscriber identity module card after the first baseband chip sends the external clock signal to the subscriber identity module card; starting a second machine-card reset interface between the second reset pin and the second reset contact as well as a second machine-card data transmission interface between the second machine-card data transmission interface pin and the second machine-card data transmission interface contact based upon an initial moment of connecting the power source signal with the second smart card chip; and implementing interaction of booting data through the second machine-card data transmission interface.

Optionally, the second baseband chip is specifically used for keeping a level of the second machine-card reset interface as a low level within a first time length from the initial moment of connecting the power source signal with the second smart card chip; setting the level of the second machine-card reset interface as a high level when no reset response from the second smart card chip is received within a first set time length; receiving the reset response from the second smart card chip within a second time length to a third time length from an initial moment that the level of the second machine-card reset interface is the high level; and keeping the level of the second machine-card reset interface as the high level after the third time length passes.

Optionally, the second baseband chip is specifically used for keeping the second machine-card data transmission interface in a high resistance state within a fourth time length from the initial moment of connecting the power source signal with the second smart card chip, wherein the fourth time length is smaller than the first time length; setting a level of the second machine-card data transmission interface as a high level after the fourth time length passes; and receiving the reset response from the second smart card chip.

Optionally, the second baseband chip is further used for determining that standby preparation is started by the terminal; determining that data transmission through a second machine-card data transmission interface is not needed and that a level of the second machine-card data transmission interface is kept as a low level beyond a fifth time length, and notifying the first baseband chip; and controlling the terminal to enter a standby hibernate mode after sending of an external clock signal to the subscriber identity module card is stopped; and the first baseband chip is further used for determining that standby preparation is started by the terminal; determining that data transmission through the first machine-card data transmission interface is not needed and that a level of the first machine-card data transmission interface is kept as a low level beyond the fifth time length; stopping sending the external clock signal to the subscriber identity module card after receiving the notification from the second baseband chip; and controlling the terminal to enter the standby hibernate mode.

Optionally, the first baseband chip is further used for, when the terminal is in a standby hibernate mode, sending an external clock signal to the subscriber identity module card in the case of determining that data transmission through a first machine-card data transmission interface is needed; and controlling the first machine-card data transmission interface in a going-to-transmit state after the external clock signal is kept to be output for a sixth time length from an initial moment of the external clock signal; and the second baseband chip is further used for, when the terminal is in the standby hibernate mode, controlling a second machine-card data transmission interface in the going-to-transmit state after the external clock signal is kept to be output for the sixth time length from the initial moment of the external clock signal.

Optionally, the second baseband chip is further used for, after acquiring a shutdown operation instruction, sending a low-level reset signal to the second smart card chip through a second machine-card reset interface in the case of determining that data transmission through a second machine-card data transmission interface is not needed; notifying the first baseband chip after sending the reset signal to the second smart card chip; and disconnecting a power source signal with the second smart card chip after the first baseband chip stops sending an external clock signal to the subscriber identity module card; and the first baseband chip is further used for, after acquiring a shutdown operation instruction, sending a low-level reset signal to the first smart card chip through a first machine-card reset interface in the case of determining that data transmission through a first machine-card data transmission interface is not needed; stopping sending the external clock signal to the subscriber identity module card after receiving the notification from the second baseband chip; and disconnecting the power source signal with the first smart card chip..

### Brief Description of the Drawings

FIG. 1 is a structural schematic diagram of an SIM card according to a first embodiment of the invention;
FIG. 2 is a position layout schematic diagram of pins of an SIM card in the prior art;
FIG. 3 is a first position layout schematic diagram of pins of an SIM card according to the first embodiment of the invention;
FIG. 4 is a second position layout schematic diagram of pins of an SIM card according to the first embodiment of the invention;
FIG. 5 is a structural schematic diagram of a terminal according to a second embodiment of the invention;
FIG. 6 is a first flow chart of a booting processing method for the terminal according to a third embodiment of the invention;
FIG. 7 is a second flow chart of a booting processing method for the terminal according to the third embodiment of the invention;
FIG. 8 is a time sequence control schematic diagram of respective machine-card interfaces in the booting processing method for the terminal according to the third embodiment of the invention;
FIG. 9 is a first flow chart of a standby processing method for the terminal according to a fourth embodiment of the invention;
FIG. 10 is a second flow chart of a standby processing method for the terminal according to the fourth embodiment of the invention;
FIG. 11 is a first flow chart of a method for starting the terminal from a standby hibernate mode according to a fifth embodiment of the invention;
FIG. 12 is a second flow chart of a method for starting the terminal from a standby hibernate mode according to the fifth embodiment of the invention;
FIG. 13 is a first flow chart of a shutdown processing method for the terminal according to a sixth embodiment of the invention;
FIG. 14 is a second flow chart of a shutdown processing method for the terminal according to the sixth embodiment of the invention; and
FIG. 15 is a structural schematic diagram of a terminal with an SIM card inserted therein according to a seventh embodiment of the invention.

### Detailed Description of the Embodiments

In order to give a technical solution in which two numbers in one SIM card are used online at the same time and two numbers belonging to networks with different standards are used in one SIM card, the embodiments of the invention provide an SIM card, a terminal and related processing methods, preferred embodiments of the invention will be described below with reference to the drawings of the description, and it should be understood that the preferred embodiments described herein are merely for illustration and explanation of the invention, but not intended to limit the invention. In addition, in the case of no conflict, the embodiments and the features in the embodiments in this application can be combined with each other.

In the embodiments of the invention, the subscriber identity module cards include SIM cards, USIM cards and UIM cards, and the technical solution provided by the embodiments of the invention will be described below in detail by taking SIM cards as an example, which is also applicable to USIM cards and UIM cards.

### First embodiment:

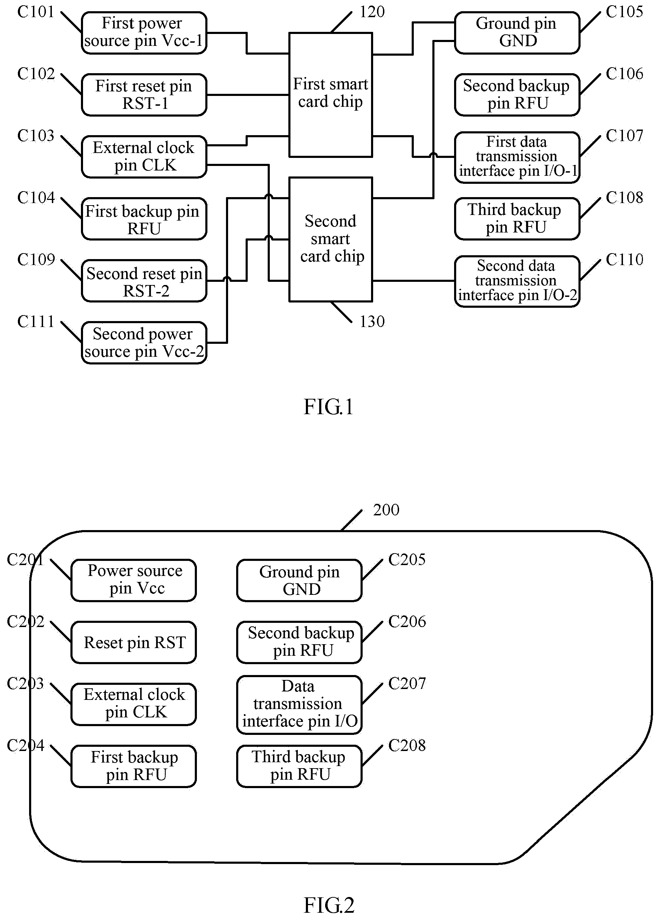

The first embodiment of the invention provides an SIM card, as shown in FIG.1, which includes a first smart card chip 120, a second smart card chip 130, a ground pin GND C105, an external clock pin CLK C103, a first power source pin Vcc-1 C101, a second power source pin Vcc-2 C111, a first reset pin RST-1 C102, a second reset pin RST-2 C109, a first data transmission interface pin I/O-1 C107 and a second data transmission interface pin I/O-2 C110, wherein:
A ground interface, a clock interface, a first power source interface, a first reset interface and a first data transmission interface of the first smart card chip 120 are correspondingly connected with GND C105, CLK C103, Vcc-1 C101, RST-1 C102 and I/O-1 C107, respectively;
A ground interface, a clock interface, a second power source interface, a second reset interface and a second data transmission interface of the second smart card chip 130 are correspondingly connected with GND C105, CLK C103, Vcc-2 C111, RST-2 C109 and I/O-2 C110, respectively.

Further, the smart card chip above may further include three backup pins for functional expansion, which are respectively a first backup pin RFU C104, a second backup pin RFU C106 and a third backup pin RFU C108.

A variety of smart card chips that are used in the prior art at present may be used as the first smart card chip 120 and the second smart card chip 130, and physical connections between respective interfaces of the smart card chips and the pins of the SIM cards are similarly completed in the package process of manufacturing the SIM cards.

The first smart card chip 120 and the second smart card chip 130 are two smart card chips, and each chip has an independent smart card operating system COS (Chip Operating System) therein and independent applications therein. The COS is responsible for the functions of the smart card, such as communication management, security management, command interpretation, file management and the like. Among these functions, the communication management is responsible for receiving or sending data (including commands and information) via an I/O interface so as to realize interaction with a terminal into which SIM cards are inserted. The security management is responsible for implementing various algorithms that need to be supported by the COS and providing a convenient API (Application Programming Interface) for application calls. The command interpretation is responsible for analyzing and processing an external command received by a communication subsystem. The file management is responsible for data reading and writing and ensuring data security.

The ground interface of the first smart card chip 120 and the ground interface of the second smart card chip 130 share the same ground pin GND C105, and the connection mode thereof is as shown in FIG.1. Signals from other interfaces of the SIM card are interacted in the form of electric signals, so it is feasible that standardization of voltage control is ensured by grounding uniformly, and correspondingly, in this embodiment of the invention, the co-grounding processing also needs to be performed on the two baseband chips of the terminal via the pin GND C105.

The clock interface of the first smart card chip 120 and the clock interface of the second smart card chip 130 share the same external clock pin CLK C103, and the connection mode thereof is as shown in FIG.1. In this embodiment of the invention, united external clock input signals are employed for the two smart card chips, and shown in the table below is electrical requirements on the external clock input signals, which are consistent with requirements on external clocks in the standards of the standard smart card ISO7816, so detailed description is not made herein.

**Table 1**

| Type of Card | Vₒₗₘᵢₙ (V) | (V) Vₒₗₘₐₓ | (V) Vₒₕₘᵢₙ | (V) Vₒₕₘₐₓ | tᵣ&t_{fmax} | fₘₐₓ (MHz) |
|---|---|---|---|---|---|---|
| 5V | -0.3 | 0.5 | 0.7×Vcc | Vcc+0.3 | 9%, maximum is 0.5µs | 5 |
| 3V | -0.3 | 0.2×Vcc | 0.8×Vcc | Vcc+0.3 | 50ns | 4 |
| 1.8V | -0.3 | 0.2×Vcc | 0.8×Vcc | Vcc+0.3 | 50ns | 4 |
| Notes: tᵣ and t_{f} must be measured in a range from 10% to 90% of Vₒₗ and Vₒₕ, and Cₒᵤₜ and Cᵢₙ are equal to 30pF. | | | | | | |

It can be seen from the above description of FIG.1 that three pins are added in the SIM card according to the first embodiment of the invention compared with the prior art, and they are the second power source pin Vcc-2 C111, the second reset pin RST-2 C109 and the second data transmission interface pin I/O-2 C110 respectively, and correspondingly, the three added pins need to be arranged at proper positions of the SIM card.

As shown in FIG.2, which is a position layout schematic diagram of pins of an SIM card 200 in the prior art, these pins include a power source pin Vcc C201, a reset pin RST C202, an external clock pin CLK C203, a first backup pin RFU C204, a ground pin GND C205, a second backup pin RFU C206, a data transmission interface pin I/O C207 and a third backup pin RFU C208;
The position layout of the respective pins is as shown in FIG.2, and based upon the arrangement direction of the SIM card as shown in FIG.2, the pins at the left side from top to bottom are Vcc C201, RST C202, CLK C203 and RFU C204 in sequence, and the pins at the right side from top to bottom are GND C205, RFU C206, I/O C207 and RFU C208.

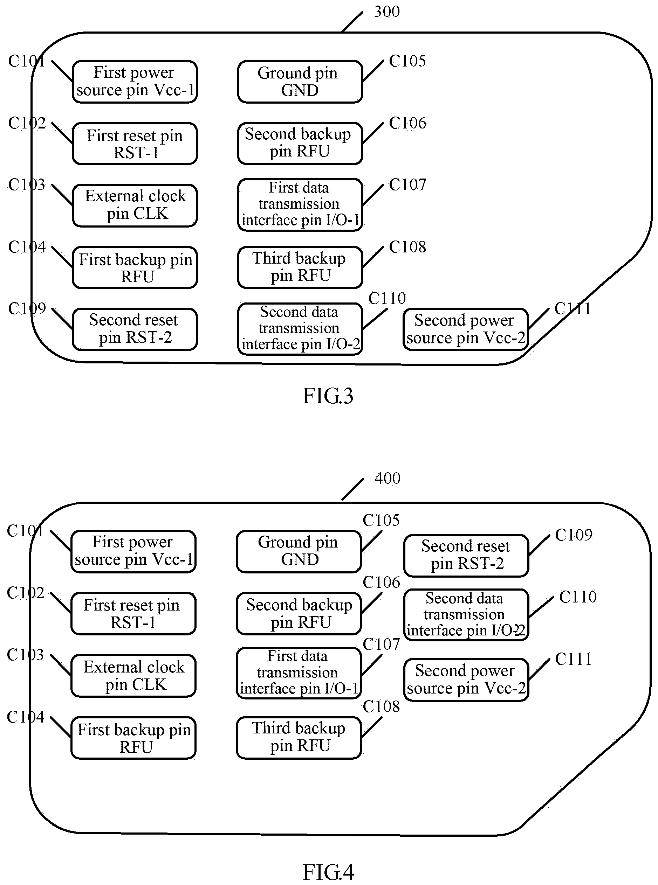

Based upon the layout positions of the pins of the current SIM card as shown in FIG.2, two layout solutions of pin positions are presented for the pins of the SIM card, as shown in FIG.1, according to the first embodiment of the invention, which are specifically as follows:
As shown in FIG.3, which is a first position layout schematic diagram of pins of an SIM card 300 according to the first embodiment of the invention, it can be seen from the drawing that three added pins RST-2 C109, I/O-2 C110 and Vcc-2 C111 are arranged below eight rest pins based upon the arrangement direction of the SIM card as shown in FIG.3, wherein RST-2 C109 and I/O-2 C110 are located just below RFU C104 and RFU C108 respectively; the spacing distance between RFU C104 and RST-2 C109 is identical to that between RFU C108 and I/O-2 C110, and is also identical to that between other pins that are vertically adjacent; and Vcc-2 C111 is located directly to the right of I/O-2 C110. The sizes of the three added pins are as same as that of the eight original pins.

In other embodiments, the positions of the three added pins as shown in FIG.3 are interchangeable, and detailed description is not made.

As shown in FIG.4, which is a second position layout schematic diagram of pins of an SIM card 400 according to the first embodiment of the invention, it can be seen from the drawing that the three added pins RST-2 C109, I/O-2 C110 and Vcc-2 C111 are arranged to the right of the eight rest pins based upon the arrangement direction of the SIM card as shown in FIG.4, wherein RST-2 C109, I/O-2 C110 and Vcc-2 C111 are located directly to the right of GND C105, RFU C106 and I/O-1 C107 respectively; and the spacing distance between GND C105 and RST-2 C109, the spacing distance between RFU C106 and I/O-2 C110 and the spacing distance between I/O-1 C107 and Vcc-2 C111 are all the same, and they are also identical to spacing distances between other pins that are horizontally adjacent. The sizes of the three added pins are as same as that of the eight original pins.

In other embodiments, the positions of the three added pins as shown in FIG.4 are interchangeable, and detailed description is not made.

According to the definitions of the shape of an SIM card in current international and national standards (ISO 7816-1 and 3GPP TS 102.221), including definitions of card length/width, pin position/size and the like, it can be determined that the above pin arrangement solutions of the SIM card presented in the first embodiment of the invention, as shown in FIG.3 and FIG.4, are feasible.

### Second embodiment:

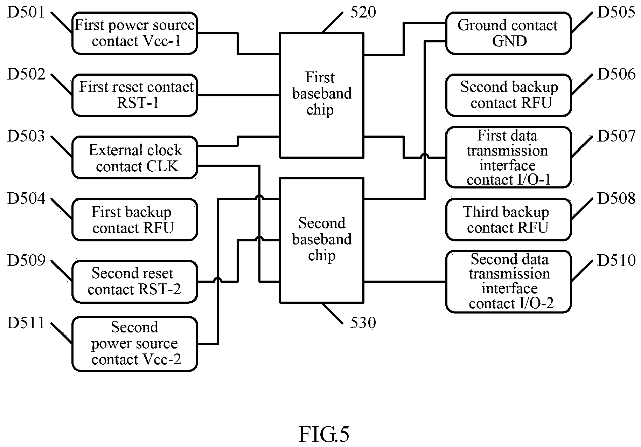

Correspondingly, based upon the SIM card provided in the above first embodiment, the second embodiment of the invention provides a card slot of an SIM card, as shown in FIG.5. The card slot includes a ground contact GND D505, an external clock contact CLK D503, a first power source contact Vcc-1 D501, a second power source contact Vcc-2 D511, a first reset contact RST-1 D502, a second reset contact RST-2 D509, a first data transmission interface contact I/O-1 D507 and a second data transmission interface contact I/O-2 D510, which are used for connecting with the ground pin GND C105, the external clock pin CLK C103, the first power source pin Vcc-1 C101, the second power source pin Vcc-2 C111, the first reset pin RST-1 C102, the second reset pin RST-2 C109, the first data transmission interface pin I/O-1 C107 and the second data transmission interface pin I/O-2 C110 of the SIM card respectively when the SIM card in the above first embodiment is inserted into the card slot.

The second embodiment of the invention further provides a terminal, which includes the above card slot of the SIM card.

The second embodiment of the invention further provides a terminal, as shown in FIG.5, which includes the card slot of the SIM card, a first baseband chip 520 and a second baseband chip 530, wherein:
A ground interface, a clock interface, a first power source interface, a first reset interface and a first data transmission interface of the first baseband chip 520 are correspondingly connected with GND D505, CLK D503, Vcc-1 D501, RST-1 D502 and I/O-2 D507, respectively; and
A ground interface, a clock interface, a second power source interface, a second reset interface and a second data transmission interface of the second baseband chip 530 are correspondingly connected with GND D505, CLK D503, Vcc-2 D511, RST-2 D509 and I/O-2 D510, respectively.

Further, the above card slot of the SIM card can further include three backup contacts, which are connected with related interfaces of the baseband chips and used for functional expansion, and the three backup contacts are a first backup contact RFU D504, a second backup contact RFU D506 and a third backup contact RFU D508, respectively.

After the SIM card is inserted into the card slot of the SIM card so that respective pins of the SIM card are correspondingly connected with respective contacts of the card slot of the SIM card respectively, respective machine-card interfaces for the SIM card and the terminal are established, and essentially also are interfaces for the smart card chips in the SIM card and the baseband chips in the terminal. These machine-card interfaces include a machine-card ground interface, a machine-card clock interface, a first machine-card power source interface, a first machine-card reset interface and a first machine-card data transmission interface which are between the first smart card chip and the first baseband chip, as well as a machine-card ground interface, a machine-card clock interface, a second machine-card power source interface, a second machine-card reset interface and a second machine-card data transmission interface which are between the second smart card chip and the second baseband chip.

Through the established respective machine-card interfaces, related processing methods for the terminal with the SIM card inserted therein are implemented, for example, a booting processing method, a standby processing method, a method for starting from a standby hibernate mode and a shutdown processing method, and the methods provided in the invention will be described below in details in embodiments in conjunction with the drawings.

### Third embodiment:

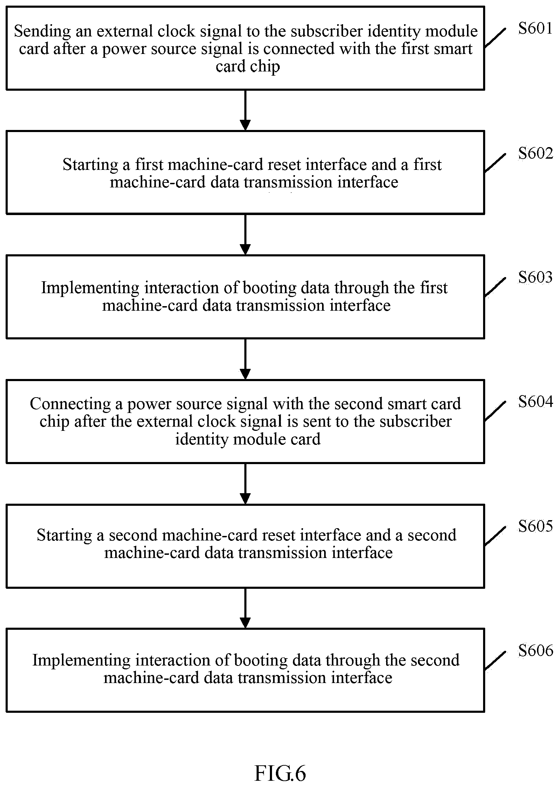

The third embodiment of the invention provides a booting processing method for the terminal with the subscriber identity module card inserted therein, the flow chart thereof is as shown in FIG.6, and the method comprises:
Step S601, sending an external clock signal to the subscriber identity module card after a power source signal is connected with the first smart card chip.
Step S602, starting a first machine-card reset interface between the first reset pin and the first reset contact as well as a first machine-card data transmission interface between the first data transmission interface pin and the first data transmission interface contact based upon an initial moment of the external clock signal.
Step S603, implementing interaction of booting data through the first machine-card data transmission interface.
Step S604, connecting a power source signal with the second smart card chip after the external clock signal is sent to the subscriber identity module card;
Step S605, starting a second machine-card reset interface between the second reset pin and the second reset contact as well as a second machine-card data transmission interface between the second data transmission interface pin and the second data transmission interface contact based upon an initial moment of connecting the power source signal with the second smart card chip.
Step S606, implementing interaction of booting data through the second machine-card data transmission interface.

In this embodiment of the invention, there is no strict sequence between steps S602-S603 and steps S604-S605.

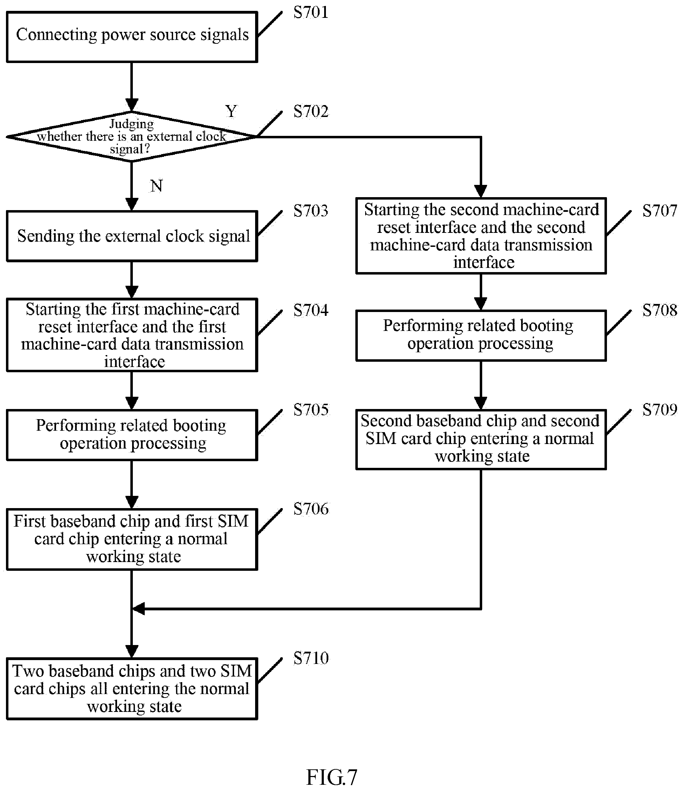

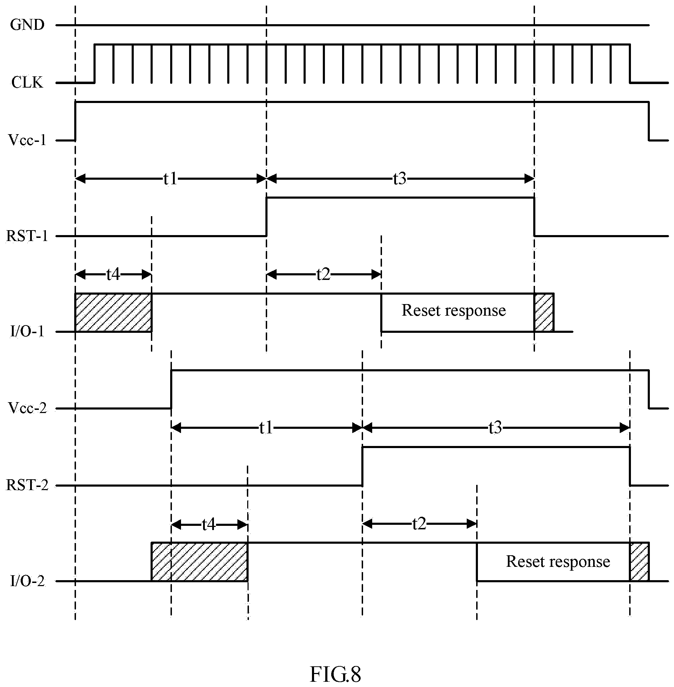

FIG.7 is a detailed flow chart of the above booting processing method for the terminal, and correspondingly, in the process of booting processing, a time sequence control diagram of respective machine-card interfaces is as shown in FIG.8:
Step S701, the terminal connects the power source signals with the smart card chips via the machine-card power source interfaces, that is, the power source signals are sent to the smart card chips, and in this embodiment of the invention, processing flows of subsequent steps are adopted for connecting the power source signal with the first smart card chip through the first machine-card power source interface and for connecting the power source signal with the second smart card chip through the second machine-card power source interface.
   Description is made below with reference to an example that the power source signal is connected with the first smart card chip at first and then the power source signal is connected with the second smart card chip to start the first smart card chip and the second smart card chip.
Step S702, judging, in the case that there is a power source signal connected, whether the terminal sends the external clock signal to the SIM card when this power source signal is connected, if not, executing step S703, otherwise, executing step S707.
Step S703 is executed if the power source signal is connected with the first smart card chip at first.
Step S707 is executed if the power source signal is connected with the second smart card chip later.
Step S703, currently the terminal is not sending the external clock signal to the SIM card, which indicates that the terminal does not connect the power source signal with another smart card chip before, and then sending of the external clock signal to the SIM card through the machine-card clock interface is triggered and started by connection of the power source signal in the above step S701, as shown in FIG.8.
Step S704, starting the first machine-card reset interface and the first machine-card data transmission interface based upon the initial moment of the external clock signal.

In this case, starting the first machine-card reset interface specifically comprises:
keeping a level of the first machine-card reset interface as a low level within a first time length t1 from the initial moment of the external signal, for example, t1 is 400 clock cycles;
setting the level of the first machine-card reset interface as a high level when no reset response from the first smart card chip is received within t1;
receiving the reset response from the first smart card chip within a second time length t2 to a third time length t3 from the initial moment that the level of the first machine-card reset interface is the high level, for example, t2 is 400 clock cycles and t3 is 40000 clock cycles; and
keeping the level of the first machine-card reset interface as the high level after t3 passes, so that the first machine-card reset interface is in an accurate reset state, thereby completing starting the first machine-card reset interface.

Starting the first machine-card data transmission interface specifically comprises:
keeping the first machine-card data transmission interface in a high resistance state within a fourth time length t4 from the initial moment of the external clock signal, wherein t4 is smaller than t1, for example, t4 is 200 clock cycles;
setting a level of the first machine-card data transmission interface as a high level after t4 passes; and
keeping the first machine-card data transmission interface in a going-to-transmit state after receiving the reset response from the first smart card chip within the second time length t2 to the third time length t3 and the third time length passes, thereby completing starting the first machine-card data transmission interface.

During the above starting flows of the first machine-card reset interface and the first machine-card data transmission interface, time sequence control of respective interfaces is as shown in FIG.8.

The above respective time lengths t1, t2, t3 and t4 are set for ensuring the stability in starting the respective interfaces.

In this embodiment of the invention, if the reset response from the first smart card chip is received within t1 from the initial moment of the external clock signal or the reset response from the first smart card chip is not received within t2 to t3 from the initial moment that the level of the first machine-card reset interface is the high level, both indicate that an abnormal situation appears, and this starting of the smart card chip fails.

Step S705, after the first machine-card reset interface and the first machine-card data transmission interface of the first smart card chip are started, the first smart card chip and the first baseband chip perform initialization operations for relevant applications and perform interaction of related booting data, including interaction of related information and instructions, through the first machine-card data transmission interface.

For example, ATR and PPS operations performed by the first smart card chip; initialization selection operation for related applications inside the first smart card chip; booting processing flow inside the first baseband chip of the terminal, and machine-card instruction and information interaction related to booting and starting between the first baseband chip and the first smart card chip; log-in authentication operation for COS inside the first smart card chip; and telephone book information reading and short message reading operations of the first baseband chip and the like.

Step S706, after the above operations of related information and instruction interaction and the like are completed, the first baseband chip of the terminal and the first smart card chip of the SIM card are started completely, and the first baseband chip and the first smart card chip enter a normal working state.

Step S707, currently the terminal is sending the external clock signal to the SIM card, which indicates that the terminal had connected the power source signal with another smart card chip before and another connected power source signal has triggered sending of the external clock signal, and at this moment, starting the second machine-card reset interface and the second machine-card data transmission interface based upon the initial moment of connecting the second smart card chip with the power source signal.

In this case, starting the second machine-card reset interface specifically comprises:
keeping a level of the second machine-card reset interface as a low level within a first time length t1 from the initial moment of connecting the power source signal with the second smart card chip, for example, t1 is 400 clock cycles;
setting the level of the second machine-card reset interface as a high level when no reset response from the second smart card chip is received within t1;
receiving the reset response from the second smart card chip within a second time length t2 to a third time length t3 from the initial moment that the level of the second machine-card reset interface is the high level, for example, t2 is 400 clock cycles and t3 is 40000 clock cycles; and
keeping the level of the second machine-card reset interface as the high level after t3 passes, so that the second machine-card reset interface is in an accurate reset state, thereby completing starting the second machine-card reset interface.

Starting the second machine-card data transmission interface specifically comprises:
keeping the second machine-card data transmission interface in a high resistance state within a fourth time length t4 from the initial moment of connecting the power source signal with the second smart card chip, wherein t4 is smaller than t1, for example, t4 is 200 clock cycles;
setting a level of the second machine-card data transmission interface as a high level after t4 passes; and
keeping the second machine-card data transmission interface in a going-to-transmit state after receiving the reset response from the second smart card chip within the second time length t2 to the third time length t3 and the third time length passes, thereby completing starting the second machine-card data transmission interface.

During the above starting flows of the second machine-card reset interface and the second machine-card data transmission interface, time sequence control of respective interfaces is as shown in FIG.8.

The above respective time lengths t1, t2, t3 and t4 are set for ensuring the stability in starting the respective interfaces.

In this embodiment of the invention, if the reset response from the second smart card chip is received within t1 from the initial moment of connecting the power source signal with the second smart card chip or the reset response from the second smart card chip is not received within t2 to t3 from the initial moment that the level of the second machine-card reset interface is the high level, both indicate that an abnormal situation appears, and this starting of the smart card chip fails.

Step S708, after the second machine-card reset interface and the second machine-card data transmission interface of the second smart card chip are started, the second smart card chip and the second baseband chip perform initialization operations for related applications and perform interaction of related booting data, including interaction of related information and instructions, through the second machine-card data transmission interface.

For example, ATR and PPS operations performed by the second smart card chip; initialization selection operation for related applications inside the second smart card chip; booting processing flow inside the second baseband chip of the terminal, and machine-card instruction and information interaction related to booting and starting between the second baseband chip and the second smart card chip; log-in authentication operation for COS inside the second smart card chip; and telephone book information reading and short message reading operations of the second baseband chip and the like.

Step S709, after the above operations of related information and instruction interaction and the like are completed, the second baseband chip of the terminal and the second smart card chip of the SIM card are started completely, and the second baseband chip and the second smart card chip enter a normal working state.

Step S710, after the first and second baseband chips of the terminal and the first and second smart card chips of the SIM card are all started completely and all enter the normal working state, that two numbers in one SIM card are in the normal working state at the same time is achieved.

### Fourth embodiment:

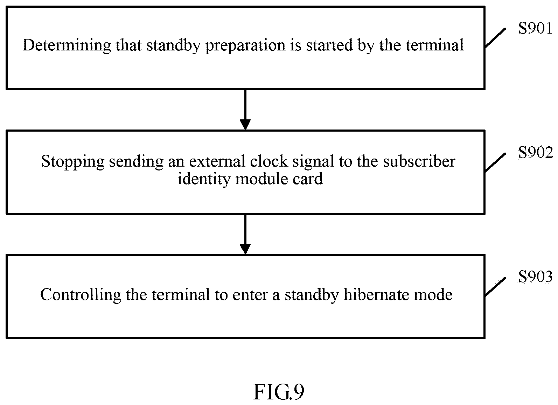

The fourth embodiment of the invention provides a standby processing method for the above terminal with the above subscriber identity module card inserted therein, the flow chart thereof is as shown in FIG.9, and the method comprises:
Step S901, determining that standby preparation is started by the terminal.
Step S902, stopping sending an external clock signal to the subscriber identity module card when data transmission through a first machine-card data transmission interface and a second machine-card data transmission interface is not needed and after levels of the first machine-card data transmission interface and the second machine-card data transmission interface are both kept as low levels beyond a fifth time length.
Step S903, controlling the terminal to enter a standby hibernate mode.

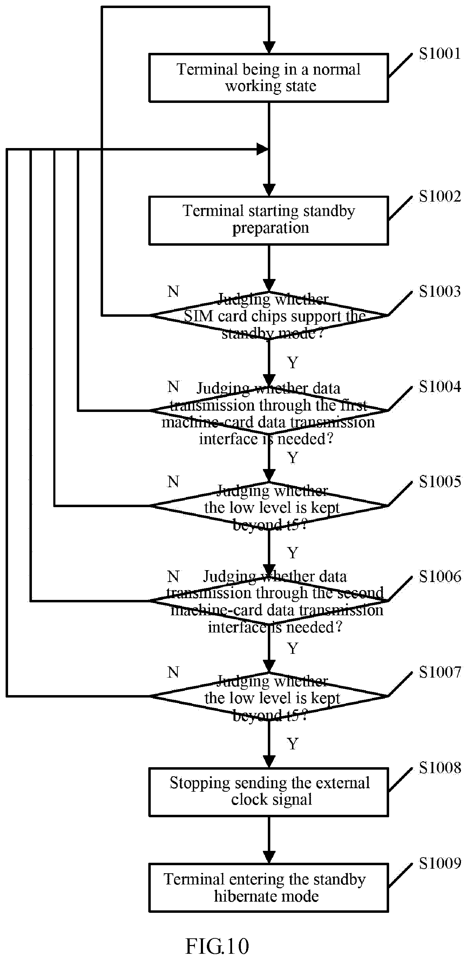

FIG.10 is a detailed flow chart of the above standby processing method for the terminal, which comprises:
Step S1001, two baseband chips of the terminal and two smart card chips of the SIM card are all in a normal working state currently.
Step S1002, the terminal starts standby preparation according to set standby preparation starting conditions when standby preparation trigger conditions are met.
   The specific standby preparation starting conditions may be a variety of set conditions in the prior art, and detailed description is not made herein.
Step S1003, judging whether the two smart card chips both support an external clock stop mode, if so, executing step S1004, otherwise, executing step S1001.
Step S1004, judging whether data transmission through the first machine-card data transmission interface is not needed by the first smart card chip, if so, executing step S1005, otherwise, executing step S1002.
   In this embodiment of the invention, data transmission through the first machine-card data transmission interface is not needed, which specifically includes that no data is being transmitted in the first machine-card data transmission interface currently, the first baseband chip does not expect to send data to the first smart card chip through the first machine-card data transmission interface, and the first baseband chip does not expect to receive data from the first smart card chip through the first machine-card data transmission interface.
Step S1005, in order to ensure that the accuracy of external clock stop operations causes no abnormal influence on the current related operation processing, judging whether the low level of the first machine-card data transmission interface is kept beyond a fifth time length t5, for example, t5 is 1860 clock cycles, if so, executing step S1006, otherwise, executing step S1002.
Step S1006, judging whether data transmission through the second machine-card data transmission interface is not needed by the second smart card chip, if so, executing step S1007, otherwise, executing step S1002.
   In this embodiment of the invention, data transmission through the second machine-card data transmission interface is not needed, which specifically includes that no data is being transmitted in the second machine-card data transmission interface currently, the second baseband chip does not expect to send data to the second smart card chip through the second machine-card data transmission interface, and the second baseband chip does not expect to receive data from the second smart card chip through the second machine-card data transmission interface.
Step S1007, in order to ensure that the accuracy of external clock stop operations causes no abnormal influence on the current related operation processing, judging whether the low level of the second machine-card data transmission interface is kept beyond the fifth time length t5, if so, executing step S1008, otherwise, executing step S1002.
   There is no strict sequence between the above steps S1004-S1005 and the above steps S1006-S1007.
Step S1008, execution of this step indicates that data transmission through the first machine-card data transmission interface and the second machine-card data transmission interface is not needed and the level of the first machine-card data transmission interface and the level of the second machine-card data transmission interface are both kept as low levels beyond t5, that is, indicates that both the first smart card chip and the second smart card chip can enter a hibernate mode, and the terminal stops sending the external clock signal to the SIM card through the machine-card clock interface.
   The level of the machine-card clock interface is kept at a fixed voltage after sending of the external clock signal is stopped. This voltage may be either a high level or a low level and is indicated by Clock Stop Indicator X in ATR returned to the terminal after the smart card chips are started, wherein Clock Stop Indicator X can represent several indications below:
   1: clock stop is allowed with no preferential level;
   2: clock stop is allowed with preference for a high level;
   3: clock stop is allowed with preference for a low level;
   4: clock stop is not allowed;
   5: clock stop is not allowed unless in a high level; and
   6: clock stop is not allowed unless in a low level.
Step S1009, after sending of the external clock signal is stopped, both the first smart card chip and the second smart card chip enter a hibernate mode, and the first baseband chip and the second baseband chip are controlled to enter the hibernate mode as well, thereby completing controlling the terminal to enter a standby hibernate mode.

### Fifth embodiment:

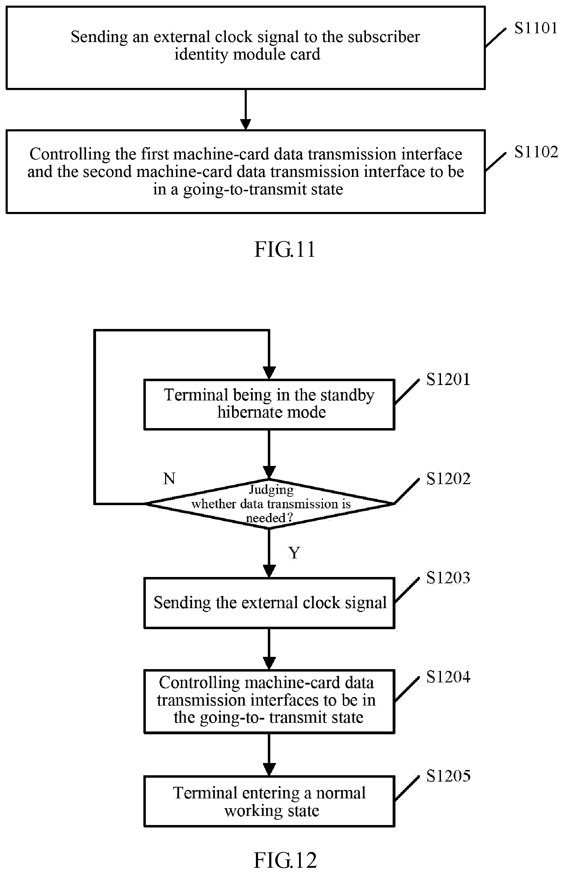

The fifth embodiment of the invention provides a method for starting the above terminal, with the above subscriber identity module card inserted therein, from the standby hibernate mode, the flow chart thereof is as shown in FIG.11, and the method comprises:
Step S1101, when the terminal is in the standby hibernate mode, sending an external clock signal to the subscriber identity module card in the case of determining that data transmission through a first machine-card data transmission interface is needed or that data transmission through a second machine-card data transmission interface is needed.
Step S1102, controlling the first machine-card data transmission interface and the second machine-card data transmission interface to be in a going-to-transmit state after the external clock signal is kept to be output for a sixth time length from an initial moment of the external clock signal.

FIG.12 is a detailed flow chart of the above method for starting the terminal from the standby hibernate mode, which comprises:
Step S1201, the terminal is in the standby hibernate mode, and no external clock signal is transmitted currently in the machine-card clock interface.
Step S1202, judging whether data transmission through the first machine-card data transmission interface or data transmission through the second machine-card data transmission interface is needed, if so, executing step S1203, otherwise, executing step S1201.

The above judgment substantially indicates that step S1203 is executed as long as data transmission through one of the two machine-card data transmission interfaces is judged to be needed.

In this embodiment of the invention, data transmission through the machine-card data transmission interfaces is needed, which specifically includes that the baseband chips need to send data to the second smart card chip through the machine-card data transmission interfaces, and/or the baseband chips expect to receive data from the smart card chips through the machine-card data transmission interfaces.

Step S1203, the baseband chip sends the external clock signal to the SIM card, which can specifically include that the baseband chip, corresponding to the machine-card data transmission interface needed to transmit data, sends the external clock signal.

For example, it is judged in the above step S1202 that data transmission through the first machine-card data transmission interface is needed, and thus the external clock signal is sent to the SIM card by the first baseband chip.

Step S1204, controlling the first machine-card data transmission interface and the second machine-card data transmission interface to be in the going-to- transmit state after the external clock signal is kept to be output for a sixth time length t6 from the initial moment of the external clock signal, for example, t6 is 700 clock cycles.

In the case, t6 is set for ensuring the stability in starting the machine-card data transmission interfaces.

After the machine-card data transmission interfaces are both in a transmit state, the corresponding baseband chips can start data transmission through the corresponding machine-card data transmission interfaces, which are needed to transmit data.

Step S1205, after the first machine-card data transmission interface and the second machine-card data transmission interface are controlled to be in the going-to-transmit state completely, the first baseband chip and the second baseband chip of the terminal and the first smart card chip and the second smart card chip of the SIM card all enter a normal working state, thereby completing the process flow of starting the terminal from the standby hibernate mode.

### Sixth embodiment:

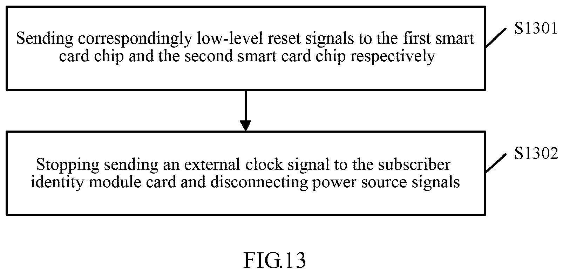

The sixth embodiment of the invention provides a shutdown processing method for the above terminal with the above subscriber identity module card inserted therein, the flow chart thereof is as shown in FIG.13, and the method comprises:
Step S1301, sending correspondingly low-level reset signals to the first smart card chip and the second smart card chip respectively through a first machine-card reset interface and a second machine-card reset interface in the case of determining that data transmission through a first machine-card data transmission interface and a second machine-card data transmission interface is not needed after acquiring a shutdown operation instruction.
Step S1302, stopping sending an external clock signal to the subscriber identity module card and disconnecting power source signals with the first smart card chip and the second smart card chip respectively.

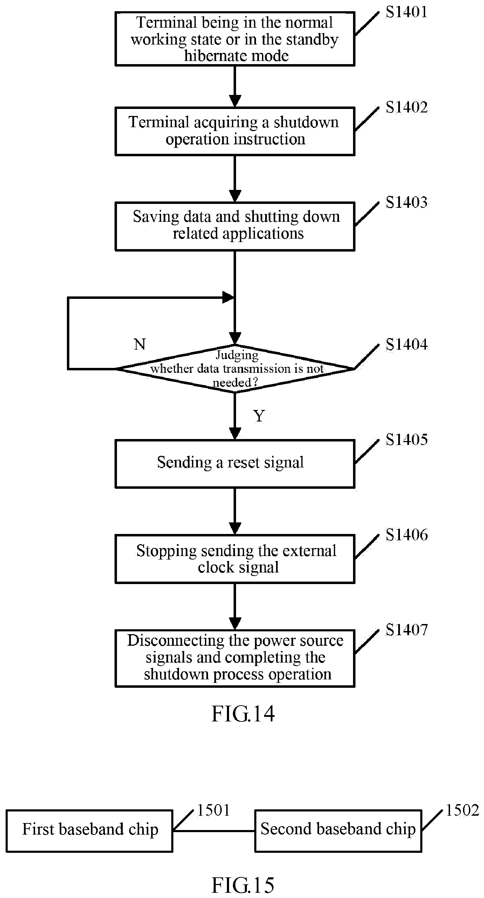

FIG.14 is a detailed flow chart of the above shutdown processing method for the terminal, which comprises:
Step S1401, two baseband chips of the terminal and two smart card chips of the SIM card are all in the normal working state or in the standby hibernate mode currently.
Step S1402, the terminal acquires a shutdown operation instruction, for example, this instruction can be triggered by shutdown operations performed by a subscriber, or can also be triggered by insufficient battery power in the terminal.
Step S1403, the baseband chips of the terminal save data and shut down related applications after the terminal acquires the shutdown operation instruction.
Step S1404, judging whether data transmission through the first machine-card data transmission interface and the second machine-card data transmission interface is needed, if so, executing step S1405, otherwise, executing step S1403.
   In this embodiment of the invention, data transmission through the first machine-card data transmission interface and the second machine-card data transmission interface is not needed, which specifically includes that no data is being transmitted in the machine-card data transmission interfaces currently, the baseband chips don't expect to send data to the smart card chips through the machine-card data transmission interfaces, and the baseband chips don't expect to receive data from the smart card chips through the machine-card data transmission interfaces.
Step S1405, the first baseband chip sends a low-level first reset signal to the first smart card chip through the first machine-card reset interface and the second baseband chip sends a low-level second reset signal to the second smart card chip through the second machine-card reset interface, so that the first machine-card reset interface and the second machine-card reset interface are both kept at low levels.
Step S1406, stopping sending the external clock signal to the SIM card.
Step S1407, the first baseband chip and the second baseband chip disconnect the power source signals with the first smart card chip and the second smart card chips respectively, thereby completing the shutdown process flow of the terminal.

In the related processing methods provided in the aforementioned third, fourth, fifth and sixth embodiments of the invention, specific requirements on electrical features and signal processing, for the machine-card clock interface, the machine-card reset interfaces, the machine-card data transmission interfaces and the machine-card power source interface, can be in compliance with ISO7816 standard, so detailed description is not made herein.

Based upon the SIM card provided in the first embodiment and the terminal provided in the second embodiment, online use of two numbers of one SIM card at the same time and use of two numbers, belonging to networks with different standards, in one SIM card, are implemented by means of the related processing methods provided in the aforementioned third, fourth, fifth and sixth embodiments.

### Seventh embodiment:

Based upon the same inventive concept, correspondingly the seventh embodiment of the invention provides a terminal with the above SIM card inserted therein according to the methods provided in the aforementioned embodiments of the invention, the structural schematic diagram of the terminal is as shown in FIG.15, and the terminal includes a first baseband chip 1501 and a second baseband chip 1502, wherein:
the first baseband chip 1501 is used for sending an external clock signal to the SIM card after a power source signal is connected with the first smart card chip; starting a first machine-card reset interface between the first reset pin and the first reset contact as well as a first machine-card data transmission interface between the first machine-card data transmission interface pin and the first machine-card data transmission interface contact based upon an initial moment of the external clock signal; and implementing interaction of booting data through the first machine-card data transmission interface; and
the second baseband chip 1502 is used for connecting a power source signal with the second smart card chip after the first baseband chip 1501 sends the external clock signal to the SIM card; starting a second machine-card reset interface between the second reset pin and the second reset contact as well as a second machine-card data transmission interface between the second machine-card data transmission interface pin and the second machine-card data transmission interface contact based upon an initial moment of connecting the power source signal with the second smart card chip; and implementing interaction of booting data through the second machine-card data transmission interface.

Preferably, the second baseband chip 1502 is specifically used for keeping a level of the second machine-card reset interface as a low level within a first time length from the initial moment of connecting the power source signal with the second smart card chip; setting the level of the second machine-card reset interface as a high level when no reset response from the second smart card chip is received within a first set time length; receiving the reset response from the second smart card chip within a second time length to a third time length from an initial moment that the level of the second machine-card reset interface is the high level; and keeping the level of the second machine-card reset interface as the high level after the third time length passes.

Preferably, the second baseband chip 1502 is specifically used for keeping the second machine-card data transmission interface in a high resistance state within a fourth time length from the initial moment of connecting the power source signal with the second smart card chip, wherein the fourth time length is smaller than the first time length; setting a level of the second machine-card data transmission interface as a high level after the fourth time length passes; and receiving the reset response from the second smart card chip.

The second baseband chip 1502 is used for determining that standby preparation is started by the terminal; determining that data transmission through a second machine-card data transmission interface is not needed and that a level of the second machine-card data transmission interface is kept as a low level beyond a fifth time length, and notifying the first baseband chip 1501; and controlling the terminal to enter a standby hibernate mode after sending of an external clock signal to the SIM card is stopped; and
The first baseband chip 1501 is used for determining that standby preparation is started by the terminal; determining that data transmission through the first machine-card data transmission interface is not needed and that a level of the first machine-card data transmission interface is kept as a low level beyond the fifth time length; stopping sending the external clock signal to the SIM card after receiving the notification from the second baseband chip 1502; and controlling the terminal to enter the standby hibernate mode.

The first baseband chip 1501 is used for, when the terminal is in a standby hibernate mode, sending an external clock signal to the SIM card in the case of determining that data transmission through a first machine-card data transmission interface is needed; and controlling the first machine-card data transmission interface in a going-to-transmit state after the external clock signal is kept to be output for a sixth time length from an initial moment of the external clock signal; and
The second baseband chip 1502 is used for, when the terminal is in the standby hibernate mode, controlling a second machine-card data transmission interface in the going-to-transmit state after the external clock signal is kept to be output for the sixth time length from the initial moment of the external clock signal.

The second baseband chip 1502 is used for, after acquiring a shutdown operation instruction, sending a low-level reset signal to the second smart card chip through a second machine-card reset interface in the case of determining that data transmission through a second machine-card data transmission interface is not needed; notifying the first baseband chip 1501 after sending the reset signal to the second smart card chip; and disconnecting a power source signal with the second smart card chip after the first baseband chip 1501 stops sending an external clock signal to the SIM card; and
The first baseband chip 1501 is used for, after acquiring a shutdown operation instruction, sending a low-level reset signal to the first smart card chip through a first machine-card reset interface in the case of determining that data transmission through a first machine-card data transmission interface is not needed; stopping sending the external clock signal to the SIM card after receiving the notification from the second baseband chip 1502; and disconnecting the power source signal with the first smart card chip.

In conclusion, the subscriber identity module card provided in the embodiment of the invention includes a first smart card chip, a second smart card chip, a ground pin, an external clock pin, a first power source pin, a second power source pin, a first reset pin, a second reset pin, a first data transmission interface pin and a second data transmission interface pin, wherein a ground interface, a clock interface, a first power source interface, a first reset interface and a first data transmission interface of the first smart card chip are correspondingly connected with the ground pin, the external clock pin, the first power source pin, the first reset pin and the first data transmission interface pin, respectively; and a ground interface, a clock interface, a second power source interface, a second reset interface and a second data transmission interface of the second smart card chip are correspondingly connected with the ground pin, the external clock pin, the second power source pin, the second reset pin and the second data transmission interface pin, respectively. Using the technical solution provided in the embodiments of the invention, online use of two numbers of one SIM card at the same time and use of two numbers, belonging to networks with different standards, in one SIM card, are realized.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore, the invention can be embodied in the form of a computer program product embodied in one or more computer useable storage mediums (including but not limited to a disk memory, a CD-ROM, an optical memory, etc.) in which computer useable program codes are contained.

The invention has been described with reference to flow charts and/or block diagrams of the method, the device (system) and the computer program product according to the embodiments of the invention. It shall be appreciated that respective flows and/or blocks in the flow charts and/or the block diagrams and combinations of the flows and/or the blocks in the flow charts and/or the block diagrams can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow charts and/or the block(s) of the block diagrams.

These computer program instructions can also be stored into a computer readable memory capable of directing the computer or the other programmable data processing device to operate in a specific manner so that the instructions stored in the computer readable memory create manufactures including instruction means which perform the functions specified in the flow(s) of the flow charts and/or the block(s) of the block diagrams.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow charts and/or the block(s) of the block diagrams.

Although the preferred embodiments of the invention have been described, those skilled in the art benefiting from the underlying inventive concept can make additional modifications and variations to these embodiments.

Evidently those skilled in the art can make various modifications and variations to the invention without departing from the scope of the invention. Thus the invention is also intended to encompass these modifications and variations thereto so long as these modifications and variations come into the scope of the claims.

## Claims

1. An operation method of a terminal, wherein the terminal comprises a card slot of a subscriber identity module card a first baseband chip (520) and a second baseband chip (530),
the card slot of the subscriber identity module card comprises a ground contact (D505), an external clock contact (D503), a first power source contact (D501), a second power source contact (D511), a first reset contact (D502), a second reset contact (D509), a first data transmission interface contact (D507) and a second data transmission interface contact (D510), which are used for connecting with a ground pin (C105), an external clock pin (C103), a first power source pin (C101), a second power source pin (C111), a first reset pin (C102), a second reset pin (C109), a first data transmission interface pin (C107) and a second data transmission interface pin (C110) of the subscriber identity module card respectively when the subscriber identity module card is inserted into the card slot; and
a ground interface, a clock interface, a first power source interface, a first reset interface and a first data transmission interface of the first baseband chip (520) are correspondingly connected with the ground contact (D505), the external clock contact (D503), the first power source contact (D501), the first reset contact (D502) and the first data transmission interface contact (D507), respectively; and
a ground interface, a clock interface, a second power source interface, a second reset interface and a second data transmission interface of the second baseband chip (530) are correspondingly connected with the ground contact (D505), the external clock contact (D503), the second power source contact (D511), the second reset contact (D509) and the second data transmission interface contact (D510), respectively; **characterized in that**, the method comprises:
sending (S601) an external clock signal to the subscriber identity module card after a power source signal is connected with a first smart card chip (120) of the subscriber identity module card;
starting (S602) a first machine-card reset interface between the first reset pin (C102) and the first reset contact (D502) as well as a first machine-card data transmission interface between the first data transmission interface pin (C107) and the first data transmission interface contact (D507) based upon an initial moment of the external clock signal; and
implementing (S603) interaction of booting data through the first machine-card data transmission interface; and
connecting (S604) a power source signal with a second smart card chip (130) of the subscriber identity module card after the external clock signal is sent to the subscriber identity module card;
starting (S605) a second machine-card reset interface between the second reset pin (C109) and the second reset contact (D509) as well as a second machine-card data transmission interface between the second data transmission interface pin (C110) and the second data transmission interface contact (D510) based upon an initial moment of connecting the power source signal with the second smart card chip (130); and
implementing (S606) interaction of booting data through the second machine-card data transmission interface.

2. The method according to claim 1, wherein starting the second machine-card reset interface based upon the initial moment of connecting the power source signal with the second smart card chip (130) specifically comprises:
keeping a level of the second machine-card reset interface as a low level within a first time length from the initial moment of connecting the power source signal with the second smart card chip (130);
setting the level of the second machine-card reset interface as a high level when no reset response from the second smart card chip (130) is received within a first set time length;
receiving the reset response from the second smart card chip (130) within a second time length to a third time length from an initial moment that the level of the second machine-card reset interface is the high level; and
keeping the level of the second machine-card reset interface as the high level after the third time length passes.

3. The method according to claim 2, wherein starting the second machine-card data transmission interface based upon the initial moment of connecting the power source signal with the second smart card chip (130) specifically comprises:
keeping the second machine-card data transmission interface in a high resistance state within a fourth time length from the initial moment of connecting the power source signal with the second smart card chip (130), wherein the fourth time length is smaller than the first time length;
setting a level of the second machine-card data transmission interface as a high level after the fourth time length passes; and
keeping the second machine-card data transmission interface in a going-to-transmit state after receiving the reset response from the second smart card chip (130) and the third time length passes.

4. The method according to claim 1, wherein the method further comprises:
determining (S901) that standby preparation is started by the terminal;
stopping (S902) sending an external clock signal to the subscriber identity module card when data transmission through a first machine-card data transmission interface and a second machine-card data transmission interface is not needed and after levels of the first machine-card data transmission interface and the second machine-card data transmission interface are both kept as low levels beyond a fifth time length; and
controlling (903) the terminal to enter a standby hibernate mode.

5. The method according to claim 1, wherein the method further comprises:
when the terminal is in the standby hibernate mode, sending (S1101) an external clock signal to the subscriber identity module card in the case of determining that data transmission through a first machine-card data transmission interface is needed or that data transmission through a second machine-card data transmission interface is needed; and
controlling (S1102) the first machine-card data transmission interface and the second machine-card data transmission interface to be in a going-to-transmit state after the external clock signal is kept to be output for a sixth time length from an initial moment of the external clock signal.

6. The method according to claim 1, wherein the method further comprises:
sending (S1301) correspondingly low-level reset signals to the first smart card chip (120) and the second smart card chip (130) respectively through a first machine-card reset interface and a second machine-card reset interface in the case of determining that data transmission through a first machine-card data transmission interface and a second machine-card data transmission interface is not needed after acquiring a shutdown operation instruction; and
stopping (S1302) sending an external clock signal to the subscriber identity module card and disconnecting power source signals with the first smart card chip (120) and the second smart card chip (130) respectively.

7. A terminal, the terminal comprises a card slot of a subscriber identity module card, a first baseband chip (520) and a second baseband chip (530), wherein
the card slot of the subscriber identity module card comprises a ground contact (D505), an external clock contact (D503), a first power source contact (D501), a second power source contact (D511), a first reset contact (D502), a second reset contact (D509), a first data transmission interface contact (D507) and a second data transmission interface contact (D510), which are used for connecting with a ground pin (C105), an external clock pin (C103), a first power source pin (C101), a second power source pin (C111), a first reset pin (C102), a second reset pin (C109), a first data transmission interface pin (C107) and a second data transmission interface pin (C110) of the subscriber identity module card respectively when the subscriber identity module card is inserted into the card slot; and
a ground interface, a clock interface, a first power source interface, a first reset interface and a first data transmission interface of the first baseband chip (520) are correspondingly connected with the ground contact (D505), the external clock contact (D503), the first power source contact (D501), the first reset contact (D502) and the first data transmission interface contact (D507), respectively; and
a ground interface, a clock interface, a second power source interface, a second reset interface and a second data transmission interface of the second baseband chip (530) are correspondingly connected with the ground contact (D505), the external clock contact (D503), the second power source contact (D511), the second reset contact (D509) and the second data transmission interface contact (D510), respectively; **characterized in that**,
the first baseband chip (520) is used for sending an external clock signal to the subscriber identity module card after a power source signal is connected with a first smart card chip (120) of the subscriber identity module card; starting a first machine-card reset interface between the first reset pin (C102) and the first reset contact (D502) as well as a first machine-card data transmission interface between the first machine-card data transmission interface pin and the first machine-card data transmission interface contact based upon an initial moment of the external clock signal; and implementing interaction of booting data through the first machine-card data transmission interface; and
the second baseband chip (530) is used for connecting a power source signal with a second smart card chip (130) of the subscriber identity module card after the first baseband chip (520) sends the external clock signal to the subscriber identity module card; starting a second machine-card reset interface between the second reset pin (C109) and the second reset contact (D509) as well as a second machine-card data transmission interface between the second machine-card data transmission interface pin and the second machine-card data transmission interface contact based upon an initial moment of connecting the power source signal with the second smart card chip (130); and implementing interaction of booting data through the second machine-card data transmission interface.

8. The terminal according to claim 7, wherein the second baseband chip (530) is specifically used for keeping a level of the second machine-card reset interface as a low level within a first time length from the initial moment of connecting the power source signal with the second smart card chip (130); setting the level of the second machine-card reset interface as a high level when no reset response from the second smart card chip (130) is received within a first set time length; receiving the reset response from the second smart card chip (130) within a second time length to a third time length from an initial moment that the level of the second machine-card reset interface is the high level; and keeping the level of the second machine-card reset interface as the high level after the third time length passes.

9. The terminal according to claim 8, wherein the second baseband chip (530) is specifically used for keeping the second machine-card data transmission interface in a high resistance state within a fourth time length from the initial moment of connecting the power source signal with the second smart card chip (130), wherein the fourth time length is smaller than the first time length; setting a level of the second machine-card data transmission interface as a high level after the fourth time length passes; and receiving the reset response from the second smart card chip (130).

10. The terminal according to claim 7, wherein the second baseband chip (530) is further used for determining that standby preparation is started by the terminal; determining that data transmission through a second machine-card data transmission interface is not needed and that a level of the second machine-card data transmission interface is kept as a low level beyond a fifth time length, and notifying the first baseband chip (520); and controlling the terminal to enter a standby hibernate mode after sending of an external clock signal to the subscriber identity module card is stopped; and
the first baseband chip (520) is further used for determining that standby preparation is started by the terminal; determining that data transmission through the first machine-card data transmission interface is not needed and that a level of the first machine-card data transmission interface is kept as a low level beyond the fifth time length; stopping sending the external clock signal to the subscriber identity module card after receiving the notification from the second baseband chip (530); and controlling the terminal to enter the standby hibernate mode.

11. The terminal according to claim 7, wherein the first baseband chip (520) is further used for, when the terminal is in a standby hibernate mode, sending an external clock signal to the subscriber identity module card in the case of determining that data transmission through a first machine-card data transmission interface is needed; and controlling the first machine-card data transmission interface in a going-to-transmit state after the external clock signal is kept to be output for a sixth time length from an initial moment of the external clock signal; and
the second baseband chip (530) is further used for, when the terminal is in the standby hibernate mode, controlling a second machine-card data transmission interface in the going-to-transmit state after the external clock signal is kept to be output for the sixth time length from the initial moment of the external clock signal.

12. The terminal according to claim 7, wherein the second baseband chip (530) is further used for, after acquiring a shutdown operation instruction, sending a low-level reset signal to the second smart card chip (130) through a second machine-card reset interface in the case of determining that data transmission through a second machine-card data transmission interface is not needed; notifying the first baseband chip (520) after sending the reset signal to the second smart card chip (130); and disconnecting a power source signal with the second smart card chip (130) after the first baseband chip (520) stops sending an external clock signal to the subscriber identity module card; and
the first baseband chip (520) is further used for, after acquiring a shutdown operation instruction, sending a low-level reset signal to the first smart card chip (120) through a first machine-card reset interface in the case of determining that data transmission through a first machine-card data transmission interface is not needed; stopping sending the external clock signal to the subscriber identity module card after receiving the notification from the second baseband chip (530); and disconnecting the power source signal with the first smart card chip (120).

## Patentansprüche

1. Verfahren zum Betreiben eines Endgerätes, wobei das Endgerät einen Kartenschlitz einer Teilnehmerkennungsmodulkarte, einen ersten Basisband-Chip (520) und einen zweiten Basisband-Chip (530) aufweist,
der Kartenschlitz der Teilnehmerkennungsmodulkarte einen Massekontakt (D505), einen externen Taktgeberkontakt (D503), einen ersten Stromquellenkontakt (D501), einen zweiten Stromquellenkontakt (D511), einen ersten Rückstellkontakt (D502), einen zweiten Rückstellkontakt (D509), einen ersten Datenübertragungsschnittstellenkontakt (D507) und einen zweiten Datenübertragungsschnittstellenkontakt (D510) aufweist, welche zum Verbinden mit einem Massestift (C105), einem externen Taktgeberstift (C103), einem ersten Stromquellenstift (C101), einem zweiten Stromquellenstift (C111), einem ersten Rückstellstift (C102), einem zweiten Rückstellstift (C109), einem ersten Datenübertragungsschnittstellenstift (C107) bzw. einem zweiten Datenübertragungsschnittstellenstift (C110) der Teilnehmerkennungsmodulkarte eingesetzt werden, wenn die Teilnehmerkennungsmodulkarte in den Kartenschlitz eingeführt wird; und
eine Masseschnittstelle, eine Taktgeberschnittstelle, eine erste Stromquellenschnittstelle, eine erste Rückstellschnittstelle und eine erste Datenübertragungsschnittstelle des ersten Baseband-Chips (520) entsprechend mit dem Massekontakt (D505), dem externen Taktgeberkontakt (D503), dem ersten Stromquellenkontakt (D501), dem ersten Rückstellkontakt (D502) bzw. dem ersten Datenübertragungsschnittstellenkontakt (D507) verbunden werden; und
eine Masseschnittstelle, eine Taktgeberschnittstelle, eine zweite Stromquellenschnittstelle, eine zweite Rückstellschnittstelle und eine zweite Datenübertragungsschnittstelle des zweiten Baseband-Chips (530) entsprechend mit dem Massekontakt (D505), dem externen Taktgeberkontakt (D503), dem zweiten Stromquellenkontakt (D511), dem zweiten Rückstellkontakt (D509) bzw. dem zweiten Datenübertragungsschnittstellenkontakt (D510) verbunden werden; **dadurch gekennzeichnet, dass** das Verfahren Folgendes aufweist:
Senden (S601) eines externen Taktgebersignals an die Teilnehmerkennungsmodulkarte, nachdem ein Stromquellensignal mit einem ersten Smartcard-Chip (120) der Teilnehmerkennungsmodulkarte verbunden wird;
Starten (S602) einer ersten Maschine-Karte Rückstellschnittstelle zwischen dem ersten Rückstellstift (C102) und dem ersten Rückstellkontakt (D502) sowie einer ersten Maschine-Karte Datenübertragungsschnittstelle zwischen dem ersten Datenübertragungsschnittstellenstift (C107) und dem ersten Datenübertragungsschnittstellenkontakt (D507) auf der Basis eines Ausgangszeitpunkts des externen Taktgebersignals; sowie
Durchführen (S603) einer Interaktion von Booting-Daten durch die erste Maschine-Karte Datenübertragungsschnittstelle; und
Verbinden (S604) eines Stromquellensignals mit einem zweiten Smartcard-Chip (130) der Teilnehmerkennungsmodulkarte, nachdem das externe Taktgebersignal an die Teilnehmerkennungsmodulkarte gesendet wird;
Starten (S605) einer zweiten Maschine-Karte Rückstellschnittstelle zwischen dem zweiten Rückstellstift (C109) und dem zweiten Rückstellkontakt (D509) sowie einer zweiten Maschine-Karte Datenübertragungsschnittstelle zwischen dem zweiten Datenübertragungsschnittstellenstift (C110) und dem zweiten Datenübertragungsschnittstellenkontakt (D510) auf der Basis eines Ausgangszeitpunkts des Verbindens des Stromquellensignals mit dem zweiten Smartcard-Chip (130); und
Durchführen (S606) einer Interaktion von Booting-Daten durch die zweite Maschine-Karte Datenübertragungsschnittstelle.

2. Verfahren nach Anspruch 1, wobei das Starten der zweiten Maschine-Karte Rückstellschnittstelle auf der Basis des Ausgangszeitpunkts des Verbindens des Stromquellensignals mit dem zweiten Smartcard-Chip (130) insbesondere Folgendes aufweist:
Halten eines Pegels der zweiten Maschine-Karte Rückstellschnittstelle als niedrigen Pegel innerhalb einer ersten Zeitspanne ab dem Ausgangszeitpunkt des Verbindens des Stromquellensignals mit dem zweiten Smartcard-Chip (130);
Einstellen des Pegels der zweiten Maschine-Karte Rückstellschnittstelle als hohen Pegel, wenn von dem zweiten Smartcard-Chip (130) innerhalb einer ersten festgelegten Zeitspanne keine Rückstellantwort empfangen wird;
Empfangen der Rückstellantwort von dem zweiten Smartcard-Chip (130) innerhalb einer zweiten Zeitspanne bis zu einer dritten Zeitspanne ab einem Ausgangszeitpunkt, dass der Pegel der zweiten Maschine-Karte Rückstellschnittstelle der hohe Pegel ist; und
Halten des Pegels der zweiten Maschine-Karte Rückstellschnittstelle als hohen Pegel, nachdem die dritte Zeitspanne abläuft.

3. Verfahren nach Anspruch 2, wobei das Starten der zweiten Maschine-Karte Datenübertragungsschnittstelle auf der Basis des Ausgangszeitpunktes des Verbindens des Stromquellensignals mit dem zweiten Smartcard-Chip (130) insbesondere Folgendes aufweist:
Halten der zweiten Maschine-Karte Datenübertragungsschnittstelle in einem hochohmigen Zustand innerhalb einer vierten Zeitspanne ab dem Ausgangszeitpunkt des Verbindens des Stromquellensignals mit dem zweiten Smartcard-Chip (130), wobei die vierte Zeitspanne kürzer als die erste Zeitspanne ist;
Einstellen eines Pegels der zweiten Maschine-Karte Datenübertragungsschnittstelle als hohen Pegel, nachdem die vierte Zeitspanne abläuft; und
Halten der zweiten Maschine-Karte Datenübertragungsschnittstelle in einem übertragungsbereiten Zustand, nachdem die Rückstellantwort von dem zweiten Smartcard-Chip (130) empfangen wird und die dritte Zeitspanne abläuft.

4. Verfahren nach Anspruch 1, wobei das Verfahren ferner Folgendes aufweist:
Bestimmen (S901), dass die Standby-Vorbereitung durch das Endgerät gestartet wird;
Stoppen (S902) des Sendens eines externen Taktgebersignals an die Teilnehmerkennungsmodulkarte, wenn eine Datenübertragung durch eine erste Maschine-Karte Datenübertragungsschnittstelle und eine zweite Maschine-Karte Datenübertragungsschnittstelle nicht erforderlich ist und nachdem Pegel der ersten Maschine-Karte Datenübertragungsschnittstelle und der zweiten Maschine-Karte Datenübertragungsschnittstelle beide als niedrige Pegel über eine fünfte Zeitspanne hinaus gehalten werden; und
Steuern (903) des Endgerätes, um in einen Standby-Ruhemodus einzutreten.

5. Verfahren nach Anspruch 1, wobei das Verfahren weiterhin Folgendes aufweist:
wenn sich das Endgerät in dem Standby-Ruhemodus befindet, Senden (S1101) eines externen Taktgebersignals an die Teilnehmerkennungsmodulkarte, falls bestimmt wird, dass eine Datenübertragung durch eine erste Maschine-Karte Datenübertragungsschnittstelle erforderlich ist oder dass eine Datenübertragung durch eine zweite Maschine-Karte Datenübertragungsschnittstelle erforderlich ist; und
Steuern (S1102) der ersten Maschine-Karte Datenübertragungsschnittstelle und der zweiten Maschine-Karte Datenübertragungsschnittstelle derart, dass sie sich in einem übertragungsbereiten Zustand befinden, nachdem das externe Taktgebersignal zur Ausgabe für eine sechste Zeitspanne ab einem Ausgangszeitpunkt des externen Taktgebersignals gehalten wird.

6. Verfahren nach Anspruch 1, wobei das Verfahren weiterhin Folgendes aufweist:
entsprechendes Senden (S1301) von Rückstellsignalen mit niedrigem Pegel an den ersten Smartcard-Chip (120) bzw. den zweiten Smartcard-Chip (130) durch eine erste Maschine-Karte Rückstellschnittstelle und eine zweite Maschine-Karte Rückstellschnittstelle, falls bestimmt wird, dass eine Datenübertragung durch eine erste Maschine-Karte Datenübertragungsschnittstelle und eine zweite Maschine-Karte Datenübertragungsschnittstelle nicht erforderlich ist, nachdem eine Anweisung zum Herunterfahren des Betriebes erhalten wird; und
Stoppen (S1302) des Sendens eines externen Taktgebersignals an die Teilnehmerkennungsmodulkarte und Trennen der Stromquellensignale von dem ersten Smartcard-Chip (120) bzw. dem zweiten Smartcard-Chip (130).

7. Endgerät, wobei das Endgerät einen Kartenschlitz einer Teilnehmerkennungsmodulkarte, einen ersten Baseband-Chip (520) und einen zweiten Baseband-Chip (530) aufweist, wobei
der Kartenschlitz der Teilnehmerkennungsmodulkarte einen Massekontakt (D505), einen externen Taktgeberkontakt (D503), eine ersten Stromquellenkontakt (D501), einen zweiten Stromquellenkontakt (D511), einen ersten Rückstellkontakt (D502), einen zweiten Rückstellkontakt (D509), einen ersten Datenübertragungsschnittstellenkontakt (D507) und einen zweiten Datenübertragungsschnittstellenkontakt (D510) aufweist, welche zum Verbinden mit einem Massestift (C105), einem externen Taktgeberstift (C103), einem ersten Stromquellenstift (C101), einem zweiten Stromquellenstift (C111), einem ersten Rückstellstift (C102), einem zweiten Rückstellstift (C109), einem ersten Datenübertragungsschnittstellenstift (C107) bzw. einem zweiten Datenübertragungsschnittstellenstift (C110) der Teilnehmerkennungsmodulkarte eingesetzt werden, wenn die Teilnehmerkennungsmodulkarte in den Kartenschlitz eingeführt wird; und
eine Masseschnittstelle, eine Taktgeberschnittstelle, eine erste Stromquellenschnittstelle, eine erste Rückstellschnittstelle und eine erste Datenübertragungsschnittstelle des ersten Baseband-Chips (520) entsprechend mit dem Massekontakt (D505), dem externen Taktgeberkontakt (D503), dem ersten Stromquellenkontakt (D501), dem ersten Rückstellkontakt (D502) bzw. dem ersten Datenübertragungsschnittstellenkontakt (D507) verbunden werden; und
eine Masseschnittstelle, eine Taktgeberschnittstelle, eine zweite Stromquellenschnittstelle, eine zweite Rückstellschnittstelle und eine zweite Datenübertragungsschnittstelle des zweiten Baseband-Chips (530) entsprechend mit dem Massekontakt (D505), dem externen Taktgeberkontakt (D503), dem zweiten Stromquellenkontakt (D511), dem zweiten Rückstellkontakt (D509) bzw. dem zweiten Datenübertragungsschnittstellenkontakt (D510) verbunden werden; **dadurch gekennzeichnet, dass**
der erste Baseband-Chip (520) dazu eingesetzt wird, ein externes Taktgebersignal an die Teilnehmerkennungsmodulkarte zu senden, nachdem ein Stromquellensignal mit einem ersten Smartcard-Chip (120) der Teilnehmerkennungsmodulkarte verbunden wird; eine erste Maschine-Karte Rückstellschnittstelle zwischen dem ersten Rückstellstift (C102) und dem ersten Rückstellkontakt (D502) sowie eine erste Maschine-Karte Datenübertragungsschnittstelle zwischen dem ersten Maschine-Karte Datenübertragungsschnittstellenstift und dem ersten Maschine-Karte Datenübertragungsschnittstellenkontakt auf der Basis eines Ausgangszeitpunkts des externen Taktgebersignals zu starten; sowie eine Interaktion von Booting-Daten durch die erste Maschine-Karte Datenübertragungsschnittstelle durchzuführen; und
der zweite Baseband-Chip (530) dazu eingesetzt wird, ein Stromquellensignal mit einem zweiten Smartcard-Chip (130) der Teilnehmerkennungsmodulkarte zu verbinden, nachdem der erste Baseband-Chip (520) das externe Taktgebersignal an die Teilnehmerkennungsmodulkarte sendet; eine zweite Maschine-Karte Rückstellschnittstelle zwischen dem zweiten Rückstellstift (C109) und dem zweiten Rückstellkontakt (D509) sowie eine zweite Maschine-Karte Datenübertragungsschnittstelle zwischen dem zweiten Maschine-Karte Datenübertragungsschnittstellenstift und dem zweiten Maschine-Karte Datenübertragungsschnittstellenkontakt auf der Basis eines Ausgangszeitpunkts des Verbindens des Stromquellensignals mit dem zweiten Smartcard-Chip (130) zu starten; sowie eine Interaktion von Booting-Daten durch die zweite Maschine-Karte Datenübertragungsschnittstelle durchzuführen.

8. Endgerät nach Anspruch 7, wobei der zweite Baseband-Chip (530) insbesondere dazu eingesetzt wird, einen Pegel der zweiten Maschine-Karte Rückstellschnittstelle als niedrigen Pegel innerhalb einer ersten Zeitspanne ab dem Ausgangszeitpunkt des Verbindens des Stromquellensignals mit dem zweiten Smartcard-Chip (130) zu halten; den Pegel der zweiten Maschine-Karte Rückstellschnittstelle als hohen Pegel einzustellen, wenn innerhalb einer ersten festgelegten Zeitspanne keine Rückstellantwort von dem zweiten Smartcard-Chip (130) empfangen wird; die Rückstellantwort von dem zweiten Smartcard-Chip (130) innerhalb einer zweiten Zeitspanne bis zu einer dritten Zeitspanne ab einem Ausgangszeitpunkt zu empfangen, dass der Pegel der zweiten Maschine-Karte Rückstellschnittstelle der hohe Pegel ist; und den Pegel der zweiten Maschine-Karte Rückstellschnittstelle als den hohen Pegel zu halten, nachdem die dritte Zeitspanne abläuft.

9. Endgerät nach Anspruch 8, wobei der zweite Baseband-Chip (530) insbesondere dazu eingesetzt wird, die zweite Maschine-Karte Datenübertragungsschnittstelle innerhalb einer vierten Zeitspanne ab dem Ausgangszeitpunkt des Verbindens des Stromquellensignals mit dem zweiten Smartcard-Chip (130) in einem hochohmigen Zustand zu halten, wobei die vierte Zeitspanne kürzer als die erste Zeitspanne ist; einen Pegel der zweiten Maschine-Karte Datenübertragungsschnittstelle als hohen Pegel einzustellen, nachdem die vierte Zeitspanne abläuft; und die Rückstellantwort von dem zweiten Smartcard-Chip (130) zu empfangen.

10. Endgerät nach Anspruch 7, wobei der zweite Baseband-Chip (530) ferner dazu eingesetzt wird zu bestimmen, dass von dem Endgerät eine Standby-Vorbereitung gestartet wird; zu bestimmen, dass eine Datenübertragung durch eine zweite Maschine-Karte Datenübertragungsschnittstelle nicht erforderlich ist und dass ein Pegel der zweiten Maschine-Karte Datenübertragungsschnittstelle über eine fünfte Zeitspanne hinaus als niedriger Pegel gehalten wird; und den ersten Baseband-Chip (520) zu benachrichtigen; und das Endgerät so zu steuern, dass es in einen Standby-Ruhemodus eintritt, nachdem das Senden eines externen Taktgebersignals an die Teilnehmerkennungsmodulkarte gestoppt wird; und
der erste Baseband-Chip (520) ferner dazu eingesetzt wird zu bestimmen, dass von dem Endgerät eine Standby-Vorbereitung gestartet wird; zu bestimmen, dass eine Datenübertragung durch die erste Maschine-Karte Datenübertragungsschnittstelle nicht erforderlich ist und dass ein Pegel der ersten Maschine-Karte Datenübertragungsschnittstelle über die fünfte Zeitspanne hinaus als niedriger Pegel gehalten wird; das Senden des externen Taktgebersignals an die Teilnehmerkennungsmodulkarte gestoppt wird, nachdem die Benachrichtigung von dem zweiten Baseband-Chip (530) empfangen wird; und das Endgerät so zu steuern, dass es in den Standby-Ruhezustand eintritt.

11. Endgerät nach Anspruch 7, wobei der erste Baseband-Chip (520) ferner dazu eingesetzt wird, wenn sich das Endgerät in einem Standby-Ruhezustand befindet, ein externes Taktgebersignal an die Teilnehmerkennungsmodulkarte zu senden, falls bestimmt wird, dass eine Datenübertragung durch eine erste Maschine-Karte Datenübertragungsschnittstelle erforderlich ist; und die erste Maschine-Karte Datenübertragungsschnittstelle in einen übertragungsbereiten Zustand zu steuern, nachdem das externe Taktgebersignal so gehalten wird, dass es für eine sechste Zeitspanne ab einem Ausgangszeitpunkt des externen Taktgebersignals ausgegeben wird; und
der zweite Baseband-Chip (530) ferner dazu eingesetzt wird, wenn sich das Endgerät in dem Standby-Ruhezustand befindet, eine zweite Maschine-Karte Datenübertragungsschnittstelle in den übertragungsbereiten Zustand zu steuern, nachdem das externe Taktgebersignal so gehalten wird, dass es für die sechste Zeitspanne ab dem Ausgangszeitpunkt des externen Taktgebersignals ausgegeben wird.

12. Endgerät nach Anspruch 7, wobei der zweite Baseband-Chip (530) ferner dazu eingesetzt wird, nach Erhalten einer Anweisung zum Herunterfahren des Betriebes, ein Rückstellsignal mit niedrigem Pegel an den zweiten Smartcard-Chip (130) durch eine zweite Maschine-Karte Rückstellschnittstelle zu senden, falls bestimmt wird, dass eine Datenübertragung durch eine zweite Maschine-Karte Datenübertragungsschnittstelle nicht erforderlich ist; den ersten Baseband-Chip (520) nach Senden des Rückstellsignals an den zweiten Smartcard-Chip (130) zu benachrichtigen; und ein Stromquellensignal von dem zweiten Smartcard-Chip (130) zu trennen, nachdem der erste Baseband-Chip (520) das Senden eines externen Taktgebersignals an die Teilnehmerkennungsmodulkarte stoppt; und
der erste Baseband-Chip (520) ferner dazu eingesetzt wird, nach Erhalten einer Anweisung zum Herunterfahren des Betriebs, ein Rückstellsignal mit niedrigem Pegel an den ersten Smartcard-Chip (120) durch eine erste Maschine-Karte Rückstellschnittstelle zu senden, falls bestimmt wird, dass eine Datenübertragung durch eine erste Maschine-Karte Datenübertragungsschnittstelle nicht erforderlich ist; das Senden des externen Taktgebersignals an die Teilnehmerkennungsmodulkarte nach Empfangen der Benachrichtigung von dem zweiten Baseband-Chip (530) zu stoppen; und das Stromquellensignal von dem ersten Smartcard-Chip (120) zu trennen.

## Revendications

1. Procédé de fonctionnement d'un terminal, dans lequel le terminal comporte un logement pour carte d'une carte de module d'identité d'abonné, une première puce en bande de base (520) et une seconde puce en bande de base (530),
le logement pour carte de la carte de module d'identité d'abonné comporte un contact de mise à la masse (D505), un contact d'horloge externe (D503), un premier contact de source d'alimentation (D501), un second contact de source d'alimentation (D511), un premier contact de réinitialisation (D502), un second contact de réinitialisation (D509), un premier contact d'interface de transmission de données (D507) et un second contact d'interface de transmission de données (D510), qui sont utilisés pour établir une connexion avec une broche de masse (C105), une broche d'horloge externe (C103), une première broche de source d'alimentation (C101), une seconde broche de source d'alimentation (C111), une première broche de réinitialisation (C102), une seconde broche de réinitialisation (C109), une première broche d'interface de transmission de données (C107) et une seconde broche d'interface de transmission de données (C110) de la carte de module d'identité d'abonné, respectivement, lorsque la carte de module d'identité d'abonné est insérée dans le logement pour carte ; et
une interface de masse, une interface d'horloge, une première interface de source d'alimentation, une première interface de réinitialisation et une première interface de transmission de données de la première puce en bande de base (520) sont reliées de manière correspondante au contact de mise à la masse (D505), au contact d'horloge externe (D503), au premier contact de source d'alimentation (D501), au premier contact de réinitialisation (D502) et au premier contact d'interface de transmission de données (D507), respectivement ; et
une interface de masse, une interface d'horloge, une seconde interface de source d'alimentation, une seconde interface de réinitialisation et une seconde interface de transmission de données de la seconde puce en bande de base (530) sont reliées de manière correspondante au contact de mise à la masse (D505), au contact d'horloge externe (D503), au second contact de source d'alimentation (D511), au second contact de réinitialisation (D509) et au second contact d'interface de transmission de données (D510), respectivement ; **caractérisé en ce que** le procédé comporte les étapes consistant à :
envoyer (S601) un signal d'horloge externe à la carte de module d'identité d'abonné après l'application d'un signal de source d'alimentation à une première puce de carte intelligente (120) de la carte de module d'identité d'abonné ;
démarrer (S602) une première interface de réinitialisation machine-carte entre la première broche de réinitialisation (C102) et le premier contact de réinitialisation (D502) ainsi qu'une première interface de transmission de données machine-carte entre la première broche d'interface de transmission de données (C107) et le premier contact d'interface de transmission de données (D507) sur la base d'un moment initial du signal d'horloge externe ; et
mettre en oeuvre (S603) une interaction de données d'initialisation via la première interface de transmission de données machine-carte ; et
appliquer (S604) un signal de source d'alimentation à une seconde puce de carte intelligente (130) de la carte de module d'identité d'abonné après l'envoi du signal d'horloge externe à la carte de module d'identité d'abonné ;
démarrer (S605) une seconde interface de réinitialisation machine-carte entre la seconde broche de réinitialisation (C109) et le second contact de réinitialisation (D509) ainsi qu'une seconde interface de transmission de données machine-carte entre la seconde broche d'interface de transmission de données (C110) et le second contact d'interface de transmission de données (D510) sur la base d'un moment initial d'application du signal de source d'alimentation à la seconde puce de carte intelligente (130) ; et
mettre en oeuvre (S606) une interaction de données d'initialisation via la seconde interface de transmission de données machine-carte.

2. Procédé selon la revendication 1, dans lequel le démarrage de la seconde interface de réinitialisation machine-carte sur la base du moment initial d'application du signal de source d'alimentation à la seconde puce de carte intelligente (130) comporte spécifiquement les étapes consistant à :
maintenir un niveau de la seconde interface de réalisation machine-carte à un niveau bas pendant une première durée à partir du moment initial d'application du signal de source d'alimentation à la seconde puce de carte intelligente (130) ;
fixer le niveau de la seconde interface de réinitialisation machine-carte à un niveau haut lorsque aucune réponse réinitialisation en provenance de la seconde puce de carte intelligente (130) n'est reçue pendant une première durée définie ;
recevoir la réponse de réinitialisation provenant de la seconde puce de carte intelligente (130) pendant une deuxième durée jusqu'à une troisième durée à partir d'un moment initial où le niveau de la seconde interface de réinitialisation machine-carte est le niveau haut ; et
maintenir le niveau de la seconde interface de réinitialisation machine-carte au niveau haut après l'expiration de la troisième durée.

3. Procédé selon la revendication 2, dans lequel le démarrage de la seconde interface de réinitialisation machine-carte sur la base du moment initial d'application du signal de source d'alimentation à la seconde puce de carte intelligente (130) comporte spécifiquement les étapes consistant à :
maintenir la seconde interface de transmission de données machine-carte dans un état de résistance élevée pendant une quatrième durée à partir du moment initial d'application du signal de source d'alimentation à la seconde puce de carte intelligente (130), la quatrième durée étant inférieure à la première durée ; fixer un niveau de la seconde interface de transmission de données machine-carte à un niveau haut après l'expiration de la quatrième durée ; et
maintenir la seconde interface de transmission de données machine-carte dans un état de transmission imminente après la réception de la réponse de réinitialisation provenant de la seconde puce de carte intelligente (130) et l'expiration de la troisième durée.

4. Procédé selon la revendication 1, dans lequel le procédé comporte en outre les étapes consistant à :
déterminer (S901) qu'une préparation à la mise en veille est lancée par le terminal ;
arrêter (S902) d'envoyer un signal d'horloge externe à la carte de module d'identité d'abonné lorsqu'une transmission de données via une première interface de transmission de données machine-carte et une seconde interface de transmission de données machine-carte n'est pas nécessaire et après le maintien des niveaux de la première interface de transmission de données machine-carte et de la seconde interface de transmission de données machine-carte à des niveaux bas au-delà d'une cinquième durée ; et
commander (S903) le terminal de manière à entrer dans un mode de mise en hibernation.

5. Procédé selon la revendication 1, dans lequel le procédé comporte en outre les étapes consistant à :
lorsque le terminal est dans le mode de mise en hibernation, envoyer (S1101) un signal d'horloge externe à la carte de module d'identité d'abonné dans le cas où il est déterminé qu'une transmission de données via une première interface de transmission de données machine-carte est nécessaire ou qu'une transmission de données via une seconde interface de transmission de données machine-carte est nécessaire ; et
commander (S1102) la première interface de transmission de données machine-carte et la seconde interface de transmission de données machine-carte pour qu'elles soient dans un état de transmission imminente après le maintien du signal d'horloge externe de manière à ce qu'il soit délivré pendant une sixième durée à partir d'un moment initial du signal d'horloge externe.

6. Procédé selon la revendication 1, dans lequel le procédé comporte en outre les étapes consistant à :
envoyer (S1301) de manière correspondante des signaux de réinitialisation de niveau bas à la première puce de carte intelligente (120) et à la seconde puce de carte intelligente (130) respectivement via une première interface de réinitialisation machine-carte et une seconde interface de réinitialisation machine-carte dans le cas où il est déterminé qu'une transmission de données via une première interface de transmission de données machine-carte et une seconde interface de transmission de donnée machine-carte n'est pas nécessaire après l'acquisition d'une instruction d'arrêt de fonctionnement ; et
arrêter (S1302) d'envoyer un signal d'horloge externe à la carte d'identité d'abonné et arrêter l'application des signaux de source d'alimentation à la première puce de carte intelligente (120) et à la seconde puce de carte intelligente (130) respectivement.

7. Terminal comportant un logement pour carte d'une carte de module d'identité d'abonné, une première puce en bande de base (520) et une seconde puce en bande de base (530), dans lequel
le logement pour carte de la carte de module d'identité d'abonné comporte un contact de mise à la masse (D505), un contact d'horloge externe (D503), un premier contact de source d'alimentation (D501), un second contact de source d'alimentation (D511), un premier contact de réinitialisation (D502), un second contact de réinitialisation (D509), un premier contact d'interface de transmission de données (D507) et un second contact d'interface de transmission de données (D510), qui sont utilisés pour établir une connexion avec une broche de masse (C105), une broche d'horloge externe (C103), une première broche de source d'alimentation (C101), une seconde broche de source d'alimentation (C111), une première broche de réinitialisation (C102), une seconde broche de réinitialisation (C109), une première broche d'interface de transmission de données (C107) et une seconde broche d'interface de transmission de données (C110) de la carte d'identité d'abonné, respectivement, lorsque la carte de module d'identité d'abonné est insérée dans le logement pour carte ; et
une interface de masse, une interface d'horloge, une première interface de source d'alimentation, une première interface de réinitialisation et une première interface de transmission de données de la première puce en bande de base (520) sont reliées de manière correspondante au contact de mise à la masse (D505), au contact d'horloge externe (D503), au premier contact de source d'alimentation (D501), au premier contact de réinitialisation (D502) et au premier contact d'interface de transmission de données (D507), respectivement ; et
une interface de masse, une interface d'horloge, une seconde interface de source d'alimentation, une seconde interface de réinitialisation et une seconde interface de transmission de données de la seconde puce en bande de base (530) sont reliées de manière correspondante au contact de mise à la masse (D505), au contact d'horloge externe (D503), au second contact de source d'alimentation (D511), au second contact de réinitialisation (D509) et au second contact d'interface de transmission de données (D510), respectivement ; **caractérisé en ce que** le procédé comporte les étapes consistant à :
la première puce en bande de base (520) est utilisée pour envoyer un signal d'horloge externe à la carte de module d'identité d'abonné après l'application d'un signal de source d'alimentation à une première puce de carte intelligente (120) de la carte de module d'identité d'abonné ; démarrer une première interface de réinitialisation machine-carte entre la première broche de réinitialisation (C102) et le premier contact de réinitialisation (D502) ainsi qu'une première interface de transmission de données machine-carte entre la première broche d'interface de transmission de données machine-carte et le premier contact d'interface de transmission de données machine-carte sur la base d'un moment initial du signal d'horloge externe ; et mettre en oeuvre une interaction de données d'initialisation via la première interface de transmission de données machine-carte ; et
la seconde puce en bande de base (530) est utilisée pour l'application d'un signal de source d'alimentation à une seconde puce de carte intelligente (130) de la carte d'identité d'abonné après l'envoi du signal d'horloge externe à la carte de module d'identité d'abonné par la première puce en bande de base (520) ; démarrer une seconde interface de réinitialisation machine-carte entre la seconde broche de réinitialisation (C109) et le second contact de réinitialisation (D509) ainsi qu'une seconde interface de transmission de données machine-carte entre la seconde broche d'interface de transmission de données machine-carte et le second contact d'interface de transmission de données machine-carte sur la base d'un moment initial d'application du signal de source d'alimentation à la seconde puce de carte intelligente (130) ; et mettre en oeuvre une interaction de données d'initialisation via la seconde interface de transmission de données machine-carte.

8. Terminal selon la revendication 7, dans lequel la seconde puce en bande de base (530) est spécifiquement utilisée pour maintenir un niveau de la seconde interface de réinitialisation machine-carte à un niveau bas pendant une première durée à partir du moment initial d'application du signal de source d'alimentation à la seconde puce de carte intelligente (130) ; fixer le niveau de la seconde interface de réinitialisation machine-carte à un niveau haut lorsque aucune réponse de réinitialisation provenant de la seconde puce de carte intelligente (130) n'est reçue pendant une première durée définie ; recevoir la réponse de réinitialisation provenant de la seconde puce de carte intelligente (130) pendant une deuxième durée jusqu'à une troisième durée à partir d'un moment initial où le niveau de la seconde interface de réinitialisation machine-carte est le niveau haut ; et maintenir le niveau de la seconde interface de réinitialisation machine-carte au niveau haut après l'expiration de la troisième durée.

9. Terminal selon la revendication 8, dans lequel la seconde puce en bande de base (530) est spécifiquement utilisée pour maintenir la seconde interface de transmission de données machine-carte dans un état de résistance élevée pendant une quatrième durée à partir du moment initial d'application du signal de source d'alimentation à la seconde puce de carte intelligente (130), la quatrième durée étant inférieure à la première durée ; fixer un niveau de la seconde interface de transmission de données machine-carte à un niveau haut après l'expiration de la quatrième durée ; et recevoir la réponse de réinitialisation en provenance de la seconde puce de carte intelligente (130).

10. Terminal selon la revendication 7, dans lequel la seconde puce en bande de base (530) est en outre utilisée pour déterminer que la préparation à la mise en veille est lancée par le terminal ; déterminer qu'une transmission de données via une seconde interface de transmission de données machine-carte n'est pas nécessaire et qu'un niveau de la seconde interface de transmission de données machine-carte est maintenu à un niveau bas au-delà d'une cinquième durée, et en informer la première puce en bande de base (520) ; et commander le terminal de manière à entrer dans un mode de mise en hibernation après l'arrêt de l'envoi d'un signal d'horloge externe à la carte de module d'identité d'abonné ; et
la première puce en bande de base (520) est en outre utilisée pour déterminer que la préparation à la mise en veille est lancée par le terminal ; déterminer qu'une transmission de données via la première interface de transmission de données machine-carte n'est pas nécessaire et qu'un niveau de la première interface de transmission de données machine-carte est maintenu à un niveau bas au-delà de la cinquième durée ; arrêter d'envoyer le signal d'horloge externe à la carte de module d'identité d'abonné après la réception de la notification provenant de la seconde puce en bande de base (530) ; et commander le terminal de manière à entrer dans le mode de mise en hibernation.

11. Terminal selon la revendication 7, dans lequel la première puce en bande de base (520) est en outre utilisée pour, lorsque le terminal est dans un mode de mise en hibernation, envoyer un signal d'horloge externe à la carte de module d'identité d'abonné dans le cas où il est déterminé qu'une transmission de données via une première interface de transmission de données machine-carte est nécessaire ; et commander la première interface de transmission de données machine-carte dans un état de transmission imminente après le maintien du signal d'horloge externe de manière à ce qu'il soit délivré pendant une sixième durée à partir d'un moment initial du signal d'horloge externe ; et
la seconde puce en bande de base (530) est en outre utilisée pour, lorsque le terminal est dans le mode de mise en hibernation, commander une seconde interface de transmission de données machine-carte dans l'état de transmission imminente après le maintien du signal d'horloge externe de manière à ce qu'il soit délivré pendant une sixième durée à partir du moment initial du signal d'horloge externe.

12. Terminal selon la revendication 7, dans lequel la seconde puce en bande de base (530) est en outre utilisée pour, après acquisition d'une instruction d'arrêt de fonctionnement, envoyer un signal de réinitialisation de niveau bas à la seconde puce de carte intelligente (130) via une seconde interface de réinitialisation machine-carte dans le cas où il est déterminé qu'une transmission de données via une seconde interface de transmission de données machine-carte n'est pas nécessaire ; en informer la première puce en bande de base (520) après l'envoi du signal de réinitialisation à la seconde puce de carte intelligente (130) ; et arrêter l'application d'un signal de source d'alimentation à la seconde puce de carte intelligente (130) après l'arrêt de l'envoi d'un signal d'horloge externe à la carte d'identité d'abonné par la première puce en bande de base (520) ; et
la première puce en bande de base (520) est en outre utilisée pour, après l'acquisition d'une instruction d'arrêt de fonctionnement, envoyer un signal de réinitialisation de niveau bas à la première puce de carte intelligente (120) via une première interface de réinitialisation machine-carte dans le cas où il est déterminé qu'une transmission de données via une première interface de transmission de données machine-carte n'est pas nécessaire ; arrêter d'envoyer le signal d'horloge externe à la carte de module d'identité d'abonné après la réception de la notification provenant de la seconde puce en bande de base (530) ; et arrêter l'application du signal de source d'alimentation à la première puce de carte intelligente (120) .
